# EUROPÄISCHE PATENTSCHRIFT

(11) **EP 0 002 753 B1**
(45) Veröffentlichungstag und Bekanntmachung des Hinweises auf die Patenterteilung: **05.10.1983**
(21) Anmeldenummer: 78101720.7
(22) Anmeldetag: 16.12.1978
(51) Int. Cl.: C09D 7/12, C09D 3/80, C09D 3/64, C08K 5/00, C09D 5/38, C09D 5/10

(54) **Stabilisierung von Metalleffekteinbrennlacken gegen die Einwirkung von Licht, Feuchtigkeit und Sauerstoff durch den Zusatz von Polyalkylpiperidinderivaten**
Stabilisation of heat-curable metallic enamel paints against the action of light, humidity and oxygen by the addition of polyalkylpiperidine derivatives
Stabilisation d'émaux à aspect métallique contre l'action de la lumière, de l'humidité et de l'oxygène par l'addition d'un dérivé de polyalcoylpipéridine

(30) Priorität: 30.12.1977 CH 16297/77; 28.04.1978 CH 4651/78
(43) Veröffentlichungstag der Anmeldung: 11.07.1979
(73) Patentinhaber: CIBA-GEIGY AG, 4002 Basel (CH)
(72) Erfinder: Berner, Godwin, Dr., CH-4057 Basel (CH)
(74) Vertreter: Zumstein, Fritz, Dr.

## Beschreibung

Die vorliegende Erfindung befasst sich mit dem Stabilisieren von Metalleffekteinbrennlacken auf der Basis heissvernetzbarer Alkyd- oder Acrylharze gegen die Einwirkung von Licht und Feuchtigkeit durch den Zusatz von Polyalkylpiperidinderivaten sowie mit den so stabilisierten Metalleffektlacken.

Es wurde gefunden, dass die bei der Metalleffektlackierung immer wieder auftretenden Probleme, insbesondere bezüglich Rissbildung und Glanzverlust bei Verwendung von Einbrennlacken auf der Basis heissvernetzbarer Alkyd- oder Acrylharze durch Zusatz von Lichtschutzmitteln auf der Basis von Polyalkylpiperidinderivaten, gegebenenfalls zusammen mit weiteren Stabilisatoren befriedigend gelöst werden können.

Es ist zwar aus der BE-PS 854 444 bekannt, zu thermoplastischen Polyacrylaten 2,2,6,6-Tetraalkylpiperidinderivate als Stabilisatoren zuzusetzen. Hierbei handelt es sich jedoch nicht um Harze wie sie für Einbrennlacke verwendet werden können. Aus den JP-Anm.Kokai 52-51427 und 52-22029 ist der Zusatz solcher Piperidinderivate zu Acrylharzlacken, die Nitrocellulose enthalten, bekannt. Hierbei handelt as sich um physikalisch trocknende Lacke, deren Verfärbungstendenz durch den Zusatz herabgesetzt wird. Auf die spezifischen Probleme bei der Lichteinwirkung auf metallpigmentierte Einbrennlacke - insbesondere Rissbildung und Glanzverlust - konnte aus diesen Publikationen kein Schluss gezogen werden.

Die vorliegende Erfindung betrifft daher die Verwendung von 2,2,6,6-Tetraalkylpiperidinverbindungen, ihren Säureadditionssalzen oder Komplexen mit Metallverbindungen, gegebenenfalls zusammen mit weiteren Stabilisatoren zum Stabilisieren von Metalleffekteinbrennlacken auf der Basis heissvernetzbarer Alkyd- oder Acrylharze gegen die Einwirkung von Licht, Feuchtigkeit und Sauerstoff.

Die erfindungsgemäss zu verwendenden 2,2,6,6-Tetraalkylpiperidinverbindungen sind allgemein bekannt und werden bereits gegen Lichtabbau eingesetzt. Es handelt sich dabei beispielsweise um Verbindungen die eine Gruppe der Formel (I) 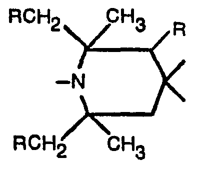 enthalten, worin R Wasserstoff oder Methyl bedeutet.

Zu den erfindungsgemäss zu verwendenden Lichtschutzmitteln gehören insbesondere folgende Verbindungsklassen:
a) Lichtschutzmittel der Formel (11) 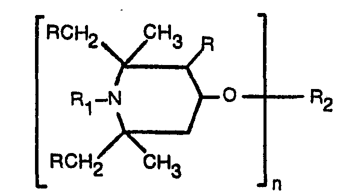 worin n die Zahlen 1-4, vorzugsweise 1 oder 2 bedeutet, R die für Formel (I) angegebene Bedeutung hat, R₁ Wasserstoff, Oxyl, C₁―C₁₈ Alkyl, C₃―C₈ Alkenyl, C₃―C₈ Alkinyl, C₇―C₁₂ Aralkyl, C₁―C₈ Alkanoyl, C₃-C₅ Alkenoyl, Glycidyl, eine Gruppe -CH₂CH(OH)-Z, worin Z Wasserstoff, Methyl oder Phenyl ist, wobei R, vorzugsweise Wasserstoff, C₁―C₁₂ Alkyl, Allyl, Benzyl, Acetyl, Acryloyl ist und R₂, wenn n=1, Wasserstoff gegebenenfalls durch ein oder mehrere Sauerstoffatome unterbrochenes C₁―C₁₈ Alkyl, Cyanäthyl, Benzyl, Glycidyl, einen einwertigen Rest einer aliphatischen, cycloaliphatischen, araliphatischen oder aromatischen Carbonsäure, Carbaminsäure oder Phosphor enthaltenden Säure oder einen einwertigen Silylrest, vorzugsweise einen Rest einer aliphatischen Carbonsäure mit 2-18 C-Atomen, einer cycloaliphatischen Carbonsäure mit 5-12 C-Atomen oder einer aromatischen Carbonsäure mit 7―15 C-Atomen, wenn n=2, C₁―C₁₂ Alkylen, C₄―C₁₂ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2-36 C-Atomen, einer cycloaliphatischen oder aromatischen Dicarbonsäure mit 8-14 C-Atomen, einer aliphatischen, cycloaliphatischen oder aromatischen Dicarbaminsäure mit 8-14 C-Atomen, wenn n=3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest, wenn n=4, einen vierwertigen Rest einer aliphatischen, cycloaliphatischen oder aromatischen Tetracarbonsäure bedeutet.

Bedeuten etwaige Substituenten C₁―C₁₂ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

In der Bedeutung von C₁―C₁₈ Alkyl können R₁ oder R₂ z.B. die oben angeführten Gruppen und dazu noch beispielsweise n-Tridecyl, n-Tetradecyl, n-Hexadecyl oder n-Octadecyl darstellen.

Wenn R, C₃―C₈ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

R₁ ist als C₃―C₈ Alkinyl bevorzugt Propargyl.

Als C₇―C₁₂ Aralkyl ist R, insbesondere Phenäthyl oder vor allem Benzyl.

R, ist als C,-Cₛ Alkanoyl beispielsweise Formyl, Propionyl, Butyryl, Octanoyl aber bevorzugt Acetyl und als C₃―C₅ Alkenoyl insbesondere Acryloyl.

Bedeutet R₂ einen einwertigen Rest einer Carbonsäure, so stellt es beispielsweise einen Essigsäure-, Stearinsäure-, Salicylsäure-, Methacrylsäure-, Maleinsäure-, Benzoe- oder β-(3,5-Di-tert.-butyl-4-hydroxyphenyl)-propionsäurerest dar.

Bedeutet R₂ einen zweiwertigen Rest einer Dicarbonsäure, so stellt es beispielsweise einen Adipinsäure-, Suberinsäure-, Sebacinsäure-, Phthalsäure-, Dibutylmalonsäure-, Dibenzylmalonsäure, Butyl-(3,5-di-tert.-butyl-4-hydroxybenzyl)-malonsäurerest oder Bicycloheptendicarbonsäure dar.

Stellt R₂ einen dreiwertigen Rest einer Tricarbonsäure dar, so bedeutet es z.B. einen Trimellithsäure- oder einen Nitrilotriessigsäurerest.

Stellt R₂ einen vierwertigen Rest einer Tetracarbonsäure dar, so bedeutet es z.B. einen Pyromellithsäurerest.

Bedeutet R₂ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für Polyalkylpiperidin-Lichtschutzmittel dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1 -Aethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-ß-(3,5-di-tert.-butyl-4-hydroxyphenyl)-propionat
9) 1-Benzyl-2,2,6,6-tetramethyl-4-piperidinylmaleinat
10) (Di-2,2,6,6-tetramethylpiperidin-4-yl)-adipat
11) (Di-2,2,6,6-tetramethylpiperidin-4-yl)-sebacat
12) (Di-1,2,3,6-tetramethyl-2,6-diäthyl-piperidin-4-yl)-sebacat
13) (Di-1-allyl-2,2,6,6-tetramethyl-piperidin-4-yl)-phthalat
14) 1-Propargyl-4-ß-cyanoäthyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester
21) Dibenzyl-malonsäure-di-(1,2,3,6-tetramethyl-2,6-diäthyl-piperidin-4-yl)-ester
22) Hexan-1',6'-bis-(4-carbamoyloxy-1-n-butyl-2,2,6,6-tetramethylpiperidin)
23) Toluol-2',4'-bis-(4-carbamoyloxy-1-n-propy)-2,2,6,6-tetramethy)piperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-( 1-propyl-2,2,6,6-tetramethylpiperidin-4-yl)-phosphit
27) Tris-(1-propyl-2,2,6,6-tetramethylpiperidin-4-yl)-phosphat
28) Phenyl-[bis-(1,2,2,6,6-pentamethylpiperidin-4-yl)]-phosphonat.

b) Lichtschutzmittel der Formel (III) 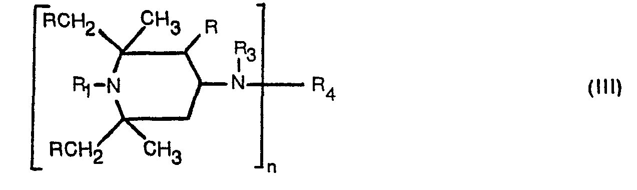 worin n die Zahlen 1 oder 2 bedeutet, R die für Formel angegebene Bedeutung hat, R, die unter a) angegebene Bedeutung hat, R₃ Wasserstoff, C₁―C₁₂ Alkyl, C₅―C₇ Cycloalkyl, C₇―C₈ Aralkyl, C₂―C₁₈ Alkanoyl, C₃-C_{"} Alkenoyl, Benzoyl ist und R₄ wenn n=1, Wasserstoff, C₁―C₁₈ Alkyl, C₅―C₇ Cycloalkyl. gegebenenfalls mit einer Cyano-, Carbonyl oder Carbamidgruppe substituiertes C₂―C₈ Alkenyl, Glycidyl, eine Gruppe der Formel ―CH₂―CH(OH)―Z oder der Formel ―CONH―Z ist, worin Z Wasserstoff, Methyl oder Phenyl bedeutet; wenn n=2, C₂―C₁₂ Alkylen, C₆―C₁₂ Arylen, Xylilen, eine 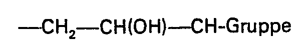 oder eine Gruppe 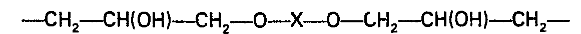 bedeutet, worin X C₂―C₁₀ Alkylen, C₆―C₁₅ Arylen, C₆―C₁₂ Cycloalkylen ist, oder, vorausgesetzt, dass R₃ nicht Alkanoyl, Alkenoyl oder Benzoyl bedeutet, R₄ auch einen zweiwertigen Rest einer aliphatischen, cycloaliphatischen oder aromatischen Dicarbonsäure oder Dicarbaminsäure oder auch die Gruppe -CO- bedeuten kann, oder R₃ und R₄ zusammen, wenn n=1, den cyclischen Rest einer aliphatischen oder aromatischen 1, 2- oder 1,3-Dicarbonsäure sein können.

Stellen etwaige Substituenten C₁―C₁₈ Alkyl dar, so haben sie die bereits unter a) angegebene Bedeutung.

Bedeuten etwaige Substituenten C₅―C₇ Cycloalkyl, so stellen sie insbesondere Cyclohexan dar.

Als C₇―C₈ Aralkyl ist R₃ insbesondere Phenäthyl oder vor allem Benzyl.

R₃ ist als C₂―C₁₈ Alkanoyl beispielsweise Propionyl, Butyryl, Octanoyl, Dodecanoyl, Hexadecanoyl, Octadecanoyl aber bevorzugt Acetyl und als C₃―C₅ Alkenoyl insbesondere Acryloyl.

Bedeutet R₄ ein gegebenenfalls mit einer Cyano-, Carbonyl- oder Carbamidgruppe substituiertes C₂―C₈ Alkenyl, dann handelt es sich z.B. um 1-Propenyl, Allyl, Methallyl, 2-Butenyl, 2-Pentenyl, 2-Hexenyl, 2-Octenyl, 2,2-Dicyanovinyl, 1-Methyl-2-cyano-2-methoxycarbonyl-vinyl, 2,2-Diacetylaminovinyl.

Stellen etwaige Substituenten C₂―C₁₂ Alkylen dar, so handelt es sich z.B. um Aethylen, Propylen, 2,2-Dimethylpropylen, Tetramethylen, Hexamethylen, Octamethylen, Decamethylen oder Dodecamethylen.

Bedeuten etwaige Substituenten C₆-C₁₅ Arylen, so stellen sie z.B. o-, m- oder p-Phenylen, 1,4-Naphthylen oder 4,4'-Diphenylen dar.

Als C₆―C₁₂ Cycloalkylen ist X insbesondere Cyclohexylen.

Beispiele für Polyalkylpiperidin-Lichtschutzmittel dieser Klasse sind folgende Verbindungen:
29) N,N'-Bis-(2,2,6,6-tetramethylpiperidin-4-yl)-hexamethylen-1,6-diamin
30) N,N'-Bis-(2,2,6,6-tetramethylpiperidin-4-yl)-hexamethylen-1,6-diacetamid
31) 1-Acetyl-4-(N-cyclohexylacetamidol-2,2,6,6-tetramethylpiperidin
32) 4-Benzylamino-2,2,6,6-tetramethylpiperidin
33) N,N'-Bis-(2,2,6,6-tetramethylpiperidin-4-yl)-N,N'-dibutyl-adipamid
34) N,N'-Bis-(2,2,6,6-tetramethylpiperidin-4-yl)-N,N'-dicyclohexyl-(2-hydroxypropylen)
35) N,N'-Bis-(2,2,6,6-tetramethylpiperidin-4-yl)-p-xylylen-diamin
36) Die Verbindung der Formel 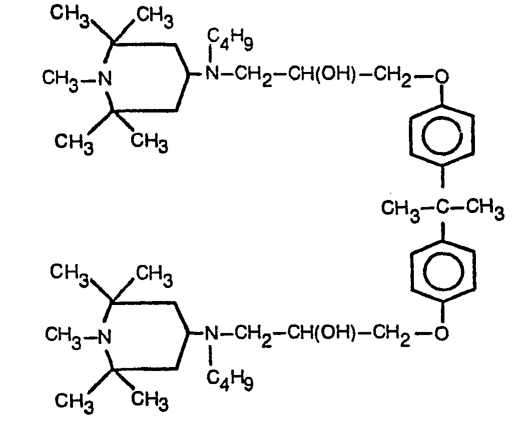
37) 4-(Bis-2-hydroxyäthyl)-amino-1,2,2,6,6-pentamethylpiperidin
38) 4-(3-Methyl-4-hydroxy-5-tert.butyl-benzoesäureamido)-2,2,6,6-tetramethylpiperidin
39) 4-Methacrylamido-1,2,2,6,6-pentamethylpiperidin
40) α-Cyano-β-methyl-β-[N-(2,2,6,6-tetramethylpiperidin-4-yl)]-amino-acrylsäure-methylester.

c) Lichtschutzmittel der Formel (IV) 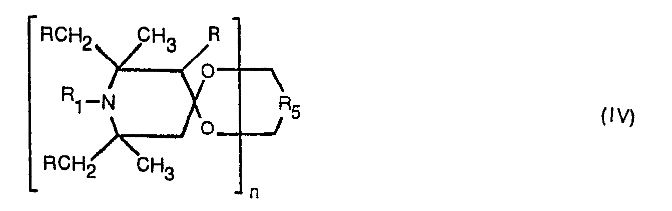 worin n die Zahlen 1 oder 2 bedeutet, R die für Formel (I) angegebene Bedeutung hat, R, die unter a) angegebene Bedeutung hat und R₅, wenn n=1, C₂―C₈ Alkylen oder Hydroxyalkylen, C₄―C₂₂ Acyloxyalkylen, wenn n=2, die Gruppe (―CH₂)₂C(CH₂―)₂ bedeutet.

Bedeutet R₅ C₂―C₈ Alkylen oder Hydroxyalkylen, so stellt es beispielsweise Aethylen, 1-Methyl- äthylen, Propylen, 2-Aethyl-propylen, 2-Aethyl-2-hydroxymethylpropylen dar.

Als C₄―C₂₂ Acyloxyalkylen bedeutet R₅ z.B. 2-Aethyl-2-acetoxymethyl-propylen.

Beispiele für Polyalkylpiperidin-Lichtschutzmittel dieser Klasse sind folgende Verbindungen:
41) 9-Aza-8,8,10,10-tetramethyl-1,5-dioxaspiro-[5.5]undecan
42) 9-Aza-8,8,10,10-tetramethyl-3-äthyl-1,5-dioxaspiro[5.5]decan
43) 8-Aza-2,7,7,8,9,9-hexamethyl-1,4-dioxyspiro[4.5]decan
44) 9-Aza-3-hydroxymethyl-3-äthyl-8,8,9,10,10-pentamethyl-1,5-dioxaspiro[5.5]undecan
45) 9-Aza-3-äthyl-3-acetoxymethyl-9-acetyl-8,8,10,10-tetramethyl-1,5-dioxaspiro[5.5]undecan
46) 2,2,6,6-TetramethylpipPridin-4-spiro-2'-(1',3'-dioxan)-5'-spiro-5"-(1",3"-dioxan)-2"-spiro-4"'-(2"',2"',6"',6"'-tetramethylpiperidin).

d) Lichtschutzmittel der Formel (V) 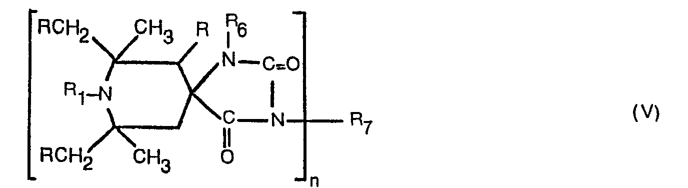 worin n die Zahlen 1 oder 2 bedeutet, R die für Formel (1) angegebene Bedeutung hat, R, die unter a) angegebene Bedeutung hat, R₆ Wasserstoff, C₁―C₁₂ Alkyl, Allyl, Benzyl, Glycidyl, C₂―C₆ Alkoxyalkyl ist und R₇, wenn n=1, Wasserstoff, C₁―C₁₂ Alkyl, C₃―C₅ Alkenyl, C₇―C₉ Aralkyl, C₅―C₇ Cycloalkyl, C₂―C₄ Hydroxyalkyl, C₂―C₆ Alkoxyalkyl, C₆―C₁₀ Aryl, Glycidyl, eine Gruppe der Formel ―(CH)―COO―Q oder der Formel ―(CH₂)ₘ―O―CO―Q, worin m 1 oder 2 und Q C₁―C₄ Alkyl oder Phenyl sind, wenn n=2, C₂―C₁₂ Alkylen, C₆―C₁₂ Arylen, eine Gruppe 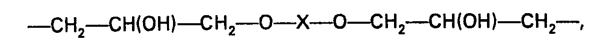 worin X C₂―C₁₀ Alkylen, C₆―C₁₅ Arylen, C₆―C₁₂ Cycloalkylen ist, oder eine Gruppe 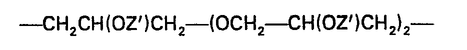 bedeutet, worin Z' Wasserstoff, C₁―C₁₈ Alkyl, Allyl, Benzyl, C₂―C₁₂ Alkanoyl oder Benzoyl ist,

Bedeuten etwaige Substituenten C₁―C₁₂ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

Z' in der Bedeutung von C₁―C₁₈ Alkyl kann z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂―C₆ Alkoxyalkyl, so stellen sie z.B. Methoxymethyl, Aethoxymethyl, Propoxymethyl, tert.-Butoxymethyl, Aethoxyäthyl, Aethoxypropyl, n-Butoxyäthyl, tert.-Butoxyäthyl, Isopropoxyäthyl oder Propoxypropyl dar.

Stellt R₇ C₃―C₅ Alkenyl dar, so bedeutet es z.B. 1-Propenyl, Allyl, Methallyl, 2-Butenyl oder 2-Pentenyl.

Als C₇―C₉ Aralkyl ist R₇ insbesondere Phenäthyl oder vor allem Benzyl und als C₅―C₇ Cycloalkyl insbesondere Cyclohexyl.

Bedeutet R₇ C₂-C₄ Hydroxyalkyl, so stellt es z.B. 2-Hydroxyäthyl, 2-Hydroxypropyl, 3-Hydroxypropyl, 2-Hydroxybutyl oder 4-Hydroxybutyl dar.

Als C₆―C₁₀ Aryl bedeutet R, insbesondere Phenyl, α- oder β-Naphthyl, die gegebenenfalls mit Halogen oder C,-C₄ Alkyl substituiert sind.

Stellt R, C₂―C₁₂ Alkylen dar, so handelt es sich z.B. um Aethylen, Propylen, 2,2-Dimethylpropylen, Tetramethylen, Hexamethylen, Octamethylen, Decamethylen oder Dodecamethylen.

Bedeutet R₇ C₆―C₁₂ Arylen, so stellt es beispielsweise o-, m- oder p-Phenylen, 1,4-Naphthylen oder 4,4'-Diphenylen dar.

Bedeutet Z' C₂―C₁₂ Alkanoyl, so stellt es beispielsweise Propionyl, Butyryl, Octanoyl, Dodecanoyl aber bevorzugt Acetyl dar.

X hat als C₂―C₁₀ Alkylen, C₆―C₁₅ Arylen oder C₆―C₁₂ Cycloalkylen die unter b) angegebene Bedeutung.

Beispiele für Polyalkylpiperidin-Lichtschutzmittel dieser Klasse sind folgende Verbindungen:
47) 3-Benzyl-1,3,8-Triaza-7,7,9,9-tetramethylspiro[4.5]decan-2,4-dion
48) 3-n-Octyl-1,3,8-triaza-7,7,9,9-tetramethylspiro[4.5]decan-2,4-dion
49) 3-Allyl-1,3,8-triaza-1,7,7,9,9-pentamethylspiro[4.5]decan-2,4-dion
50) 3-Glycidyl-1,3,8-triaza-7,7,8,9,9-pentamethylspiro[4.5]decan-2,4-dion

oder die Verbindungen der folgenden Formeln:

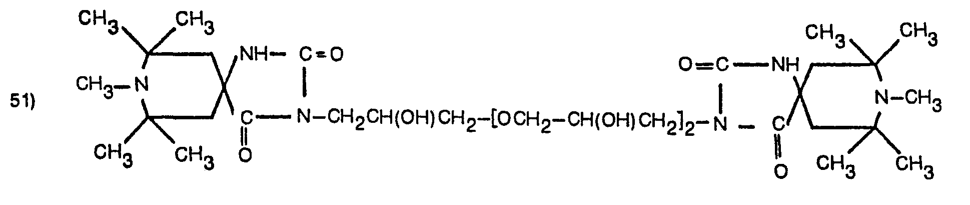

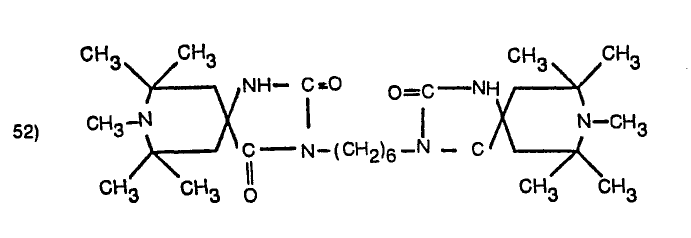

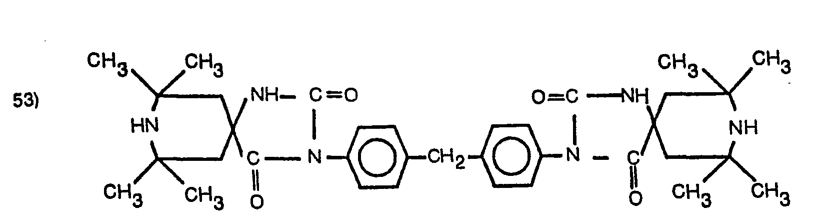

e) Lichtschutzmittel der Formel (VI) 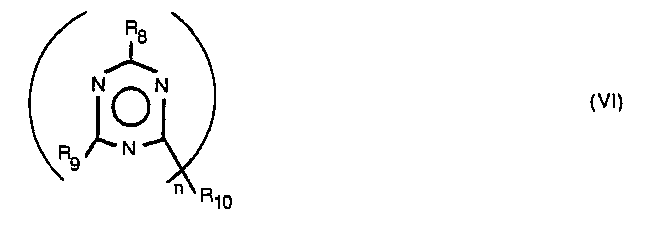 worin n die Zahlen 1 oder 2 ist und R₈ eine Gruppe der Formel 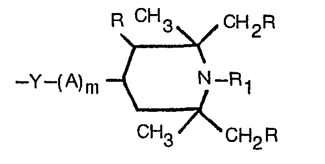 bedeutet, worin R die für Formel (I) angegebene Bedeutung hat, R₁ die unter a) angegebene Bedeutung hat, Y ―O― oder ―NR¹¹― ist, A C₂―C₆ Alkylen und m die Zahlen 0 oder 1 bedeuten, R₉ die Gruppen R₈, NR₁₁R₁₂, ―OR₁₃, ―NHCH₂OR₁₃ oder ―N(CH₂OR₁₃)₂ ist, R₁₀ wenn n=1 die Gruppen R₈ oder R₉ und wenn n=2 die Gruppe ―Y―Q―Y―, worin Q gegebenenfalls durch ―N(R₁₄)― unterbrochenes C₂―C₆ Alkylen bedeutet, R₁₁ C₁―C₁₂ Alkyl, Cyclohexyl, Benzyl oder C₁―C₄ Hydroxyalkyl oder eine Gruppe der Formel 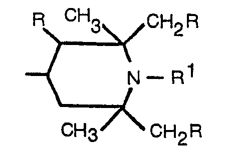 ist, R₁₂ C₁―C₁₂ Alkyl, Cyclohexyl, Benzyl, C₁―C₄ Hydroxyalkyl, R₁₃ Wasserstoff, C₁―C₁₂ Alkyl oder Phenyl und R₁₄ Wasserstoff oder die Gruppe ―CH₂OR₁₃ bedeuten oder R₁₁ und R₁₂ zusammen C₄―C₅ Alkylen oder Oxaalkylen sind oder auch R₁₁ und R₁₂ jeweils eine Gruppe der Formel 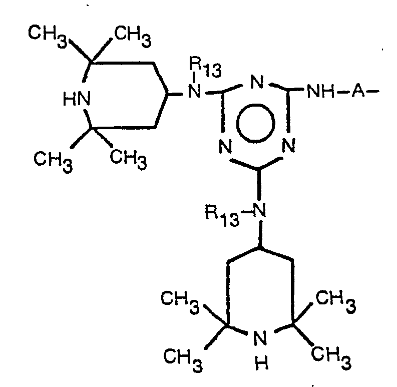 bedeuten.

Bedeuten etwaige Substituenten C₁―C₁₂ Alkyl, so stellen sie beispielsweise Methyl, Aethyl, n-Propyl, n-Butyl, sek.-Butyl, tert.-Butyl, n-Hexyl, n-Octyl, 2-Aethylhexyl, n-Nonyl, n-Decyl, n-Undecyl oder n-Dodecyl dar.

Bedeuten etwaige Substituenten C,-C₄ Hydroxyalkyl, so stellen sie z.B. 2-Hydroxyäthyl, 2-Hydroxypropyl, 3-Hydroxypropyl, 2-Hydroxybutyl oder 4-Hydroxybutyl dar.

Bedeutet A C₂―C₆ Alkylen, so stellt es beispielsweise Aethylen, Propylen, 2,2-Dimethylpropylen, Tetramethylen oder Hexamethylen dar.

Stellen R₁₁ und R₁₂ zusammen C₄―C₅ Alkylen oder Oxaalkylen dar, so bedeutet dies z.B. Tetramethylen, Pentamethylen oder 3-Oxa-pentamethylen.

Beispiele für Polyalkylpiperidin-Lichtschutzmittel dieser Klasse sind die Verbindungen der folgenden Formeln:

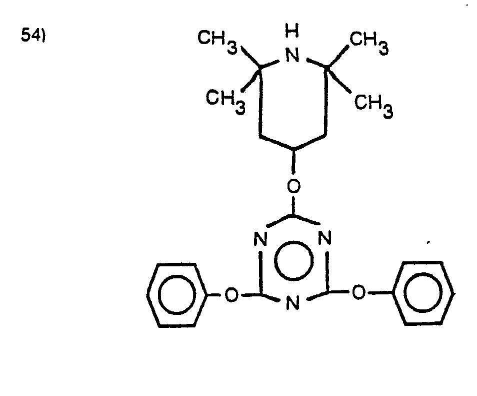

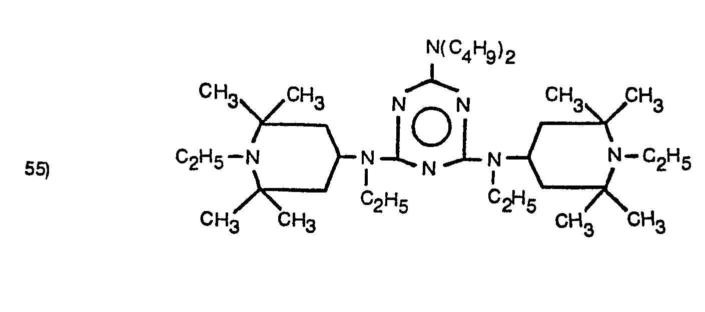

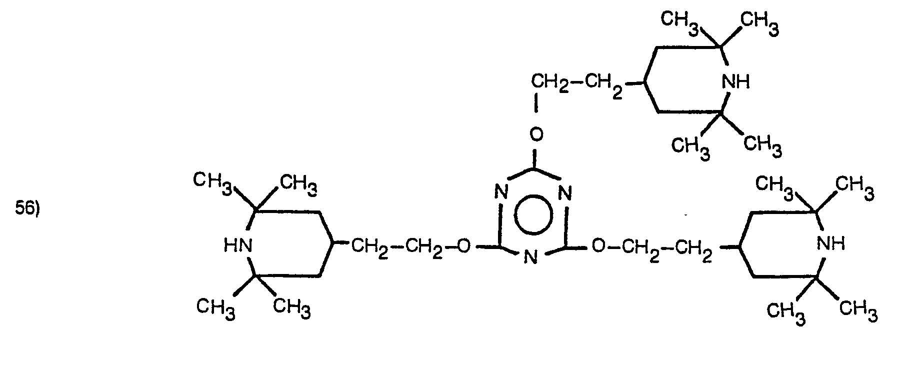

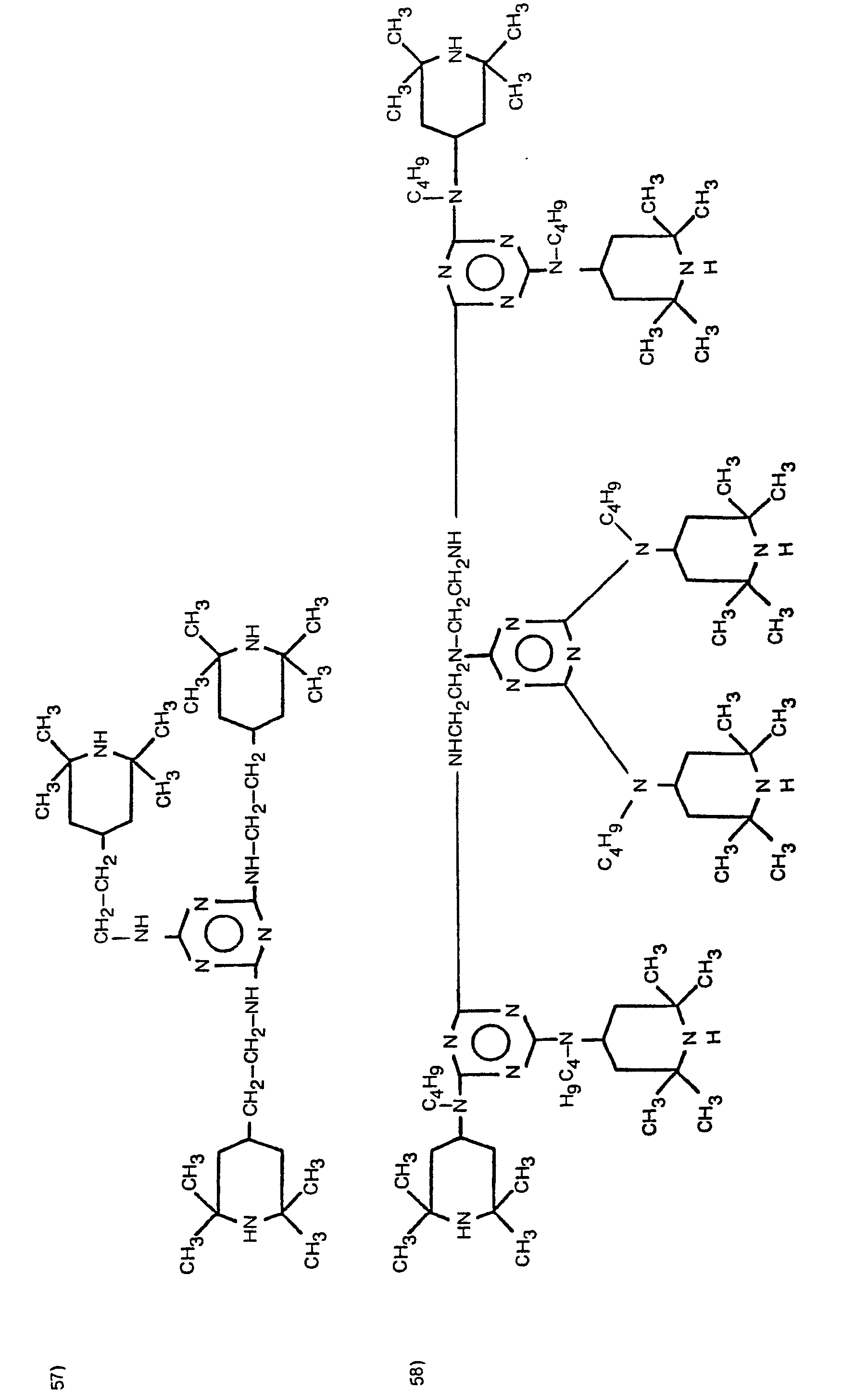

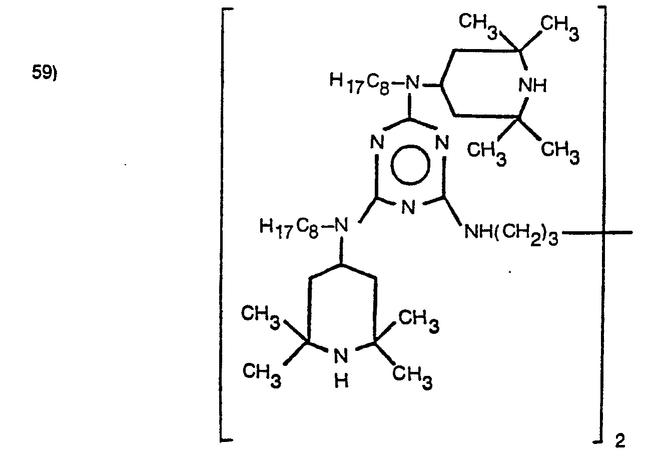

f) Lichtschutzmittel der Formel (VII) 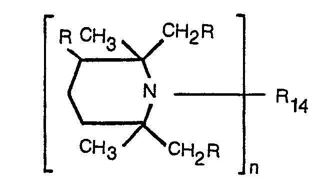 worin n die Zahlen 1 oder 2 bedeutet, R die für Formel (I) angegebene Bedeutung hat und R₁₄, wenn n=1, C₄―C₁₈ Alkyl, C₇―C₁₂ Aralkyl, die Gruppe ―CO―R₁₅, C₁―C₄ Alkyl substituiert durch ―CN, ―COOR₁₆, ―OH, ―OCOR₁₇ oder 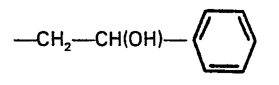 bedeutet, wobei R₁₅ C₁―C₁₂ Alkyl, C₂―C₄ Alkenyl oder Phenyl, R₁₆ C₁―C₁₈ Alkyl, R₁₇ C₁―C₁₈ Alkyl, C₂―C₁₀ Alkenyl, Cyclohexyl, Benzyl oder C₆―C₁₀ Aryl sind oder, wenn n=2, R₁₄ C₄―C₁₂ Alkylen, 2-Butenylen-1,4, Xylylen, die Gruppe 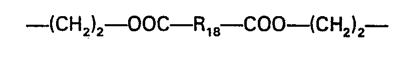 oder die Gruppe ―CH₂―OOC―R₁₉―COO―CH₂― ist, wobei R₁₈ C₂―C₁₀ Alkylen, Phenylen oder Cyclohexylen und R₁₉ C₂―C₁₀ Alkylen, Xylylen oder Cyclohexylen bedeuten.

Bedeuten etwaige Substituenten C₁―C₁₂ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

Etwaige Substituenten, die C₁―C₁₈ Alkyl bedeuten, können z.B. die oben angeführten Gruppen und dazu noch beispielsweise n-Tridecyl, n-Tetradecyl, n-Hexadecyl oder n-Octadecyl darstellen.

Stellen etwaige Gruppen C₂―C₁₀ Alkylen dar, so bedeuten sie beispielsweise Aethylen, Propylen, 2,2-Dimethylpropylen, Tetramethylen, Hexamethylen, Octamethylen oder Decamethylen.

R₁₄ bedeutet als C₄-C,₈ Alkyl z.B. n-Butyl, sek.-Butyl, tert.-Butyl, n-Hexyl, n-Octyl, 2-Aethyl-hexyl, 1,1-Dimethyl-2-tert.-butyläthyl, n-Nonyl, n-Decyl, n-Dodecyl, n-Tridecyl, n-Tetradecyl, n-Hexadecyl oder n-Octadecyl.

Bedeutet R₁₄ ein durch ―CN substituiertes C₁―C₄ Alkyl, so stellt es beispielsweise Cyanomethyl, Cyanoäthyl, 3-Cyano-n-propyl, 4-Cyano-n-butyl dar.

Bedeutet R₁₄ C₄―C₁₂ Alkylen, so handelt es sich z.B. um 2,2-Dimethylpropylen, Tetramethylen, Hexamethylen, Ocfamethylen, Decamethylen oder Dodecamethylen.

Stellt R₁₄ C₇―C₁₂ Aralkyl dar, so bedeutet es insbesondere Phenäthyl, p-Methyl-benzyl oder vor allem Benzyl.

R₁₅ bedeutet als C₂―C₄ Alkenyl beispielsweise Vinyl, 1-Propenyl, Allyl, Methallyl, 2-Butenyl.

R₁₇ bedeutet als C₂―C₁₀ Alkenyl z.B. die für R₁₅ in der Bedeutung Alkenyl angeführten Gruppen und dazu noch beispielsweise Crotyl, 2-Hexenyl, 2-Octenyl oder 2-Decenyl.

Stellt R₁₇ C₆―C₁₀ Aryl dar, so bedeutet es beispielsweise gegebenenfalls in o- oder p-Stellung mit Methyl, Aethyl, Isopropyl, n-Butyl oder tert.-Butyl substituiertes Phenyl.

Beispiele für Polyalkylpiperidin-Lichtschutzmittel dieser Klasse sind folgende Verbindungen:
60) Bis-[β-(2,2,6,6-tetramethylpiperidino)-äthyl]-sebacat
61) α-(2,2,6,6-Tetramethyl-piperidino)-essigsäure-n-octylester
62) 1,4-Bis-(2,2,6,6-tetramethylpiperidino)-2-buten.

g) Lichtschutzmittel der Formel (VIII) 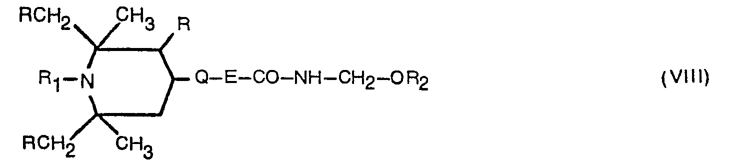 worin Q ―N(R₃)― oder ―O― ist, E C₁―C₃ Alkylen, die Gruppe ―CH₂―CH(R₄)―O―, worin R₄ Wasserstoff, Methyl oder Phenyl ist, die Gruppe ―(CH₂)₃―NH―oder eine Einfachbindung bedeutet, R Wasserstoff oder Methyl, R₁ Wasserstoff, C₁―C₁₈ Alkyl, C₃―C₈ Alkenyl, C₃―C₈ Alkinyl, C₇―C₁₂ Aralkyl, C₁―C₈ Alkanoyl, C₃―C₅ Alkenoyl, Glycidyl, R₂ Wasserstoff oder C₁―C₁₈ Alkyl bedeuten, R₃ Wasserstoff, C₁―C₁₈ Alkyl, C₅―C₇ Cycloalkyl, C₇―C₁₂ Aralkyl, Cyanäthyl, C₆―C₁₀ Aryl, die Gruppe -CH₂--CH(R₄)-OH, worin R₄ die oben angegebene Bedeutung hat, eine Gruppe der Formel 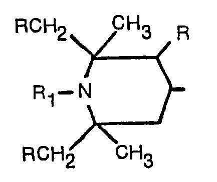 oder eine Gruppe der Formel 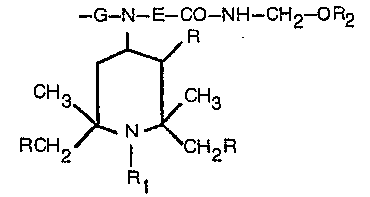 bedeutet, worin G C₂―C₆ Alkylen oder C₆―C₁₂ Arylen sein kann, oder R₃ eine Gruppe ―E―CO―NH―CH₂―OR₂ ist.

Bedeuten etwaige Substituenten C₁―C₁₈ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl, n-Dodecyl, ₙ-Tridecyl, n-Tetradecyl, n-Hexadecyl oder n-Octadecyl ^{dar.}

Stellen etwaige Substituenten C₇―C₁₂ Aralkyl dar, so bedeuten sie beispielsweise Phenäthyl oder insbesondere Benzyl.

Wenn R₁ C₃―C₈ Alkenyl bedeutet, so kann es sich z.B. um 1-Propenyl, Allyl, Methallyl, 2-Butenyl, 2-Pentenyl, 2-Hexenyl, 2-Octenyl oder 4-tert.-Butyl-2-butenyl handeln.

R ist als C₃―C₈ Alkinyl bevorzugt Propargyl. Als C₁―C₈ Alkanoyl bedeutet R beispielsweise Formyl, Propionyl, Butyryl, Octanoyl aber bevorzugt Acetyl und als C₃―C₅ Akenoyl, insbesondere Acryloyl.

R₃ bedeutet als C₅―C₇ Cycloalkyl, insbesondere Cyclohexyl.

Als C₆―C₁₀ Aryl bedeutet R₃ insbesondere Phenyl α- oder β-Naphthyl, die gegebenenfalls mit Halogen oder C₁―C₄ Alkyl substituiert sind. E bedeutet als C₁―C₃ Alkylen z.B. Methylen, Aethylen oder Propylen.

G stellt als C₂―C₆ Alkylen beispielsweise Aethylen, Propylen, 2,2-Dimethylpropylen, Tetramethylen oder Hexamethylen und als C₆―C₁₂ Arylen o-, m- oder p-Phenylen, 1,4-Naphthylen oder 4,4'-Diphenylen dar.

Beispiele für Polyalkylpiperidin-Lichtschutzmittel dieser Klasse sind folgende Verbindungen:
63) N-Hydroxymethyl-N'-2,2,6,6-Tetramethylpiperidin-4-yl-harnstoff.
64) N-Methoxymethyl-N'-2,2,6,6-Tetramethylpiperidin-4-yl-harnstoff.
65) N-Methoxymethyl-N'-n-dodecyl-N'-2,2,6,6-Tetramethylpiperidin-4-yl-harnstoff.
66) O-(2,2,6,6-Tetramethylpiperidin-4-yl)-N-methoxymethyl-urethan.

f) Polymere Verbindungen, deren wiederkehrende Struktureinheit einen Polyalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für Polyalkylpiperidin-Lichtschutzmittel dieser Klasse sind die Verbindungen der folgenden Formeln, wobei m die Zahlen 2- etwa 200 bedeutet.

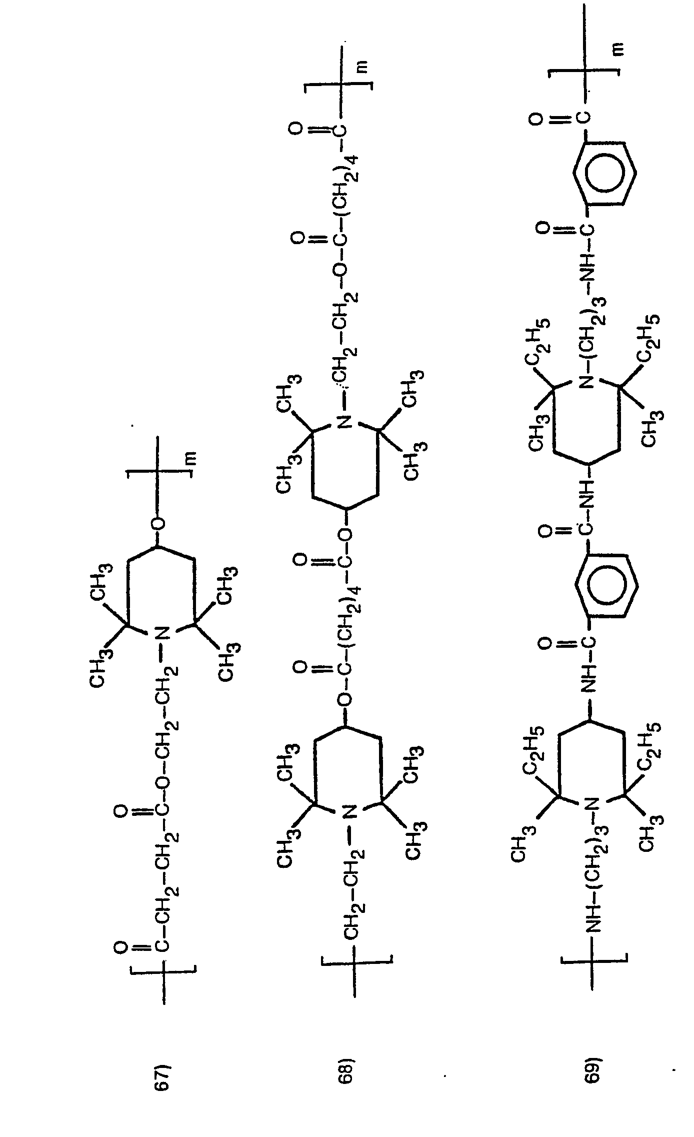

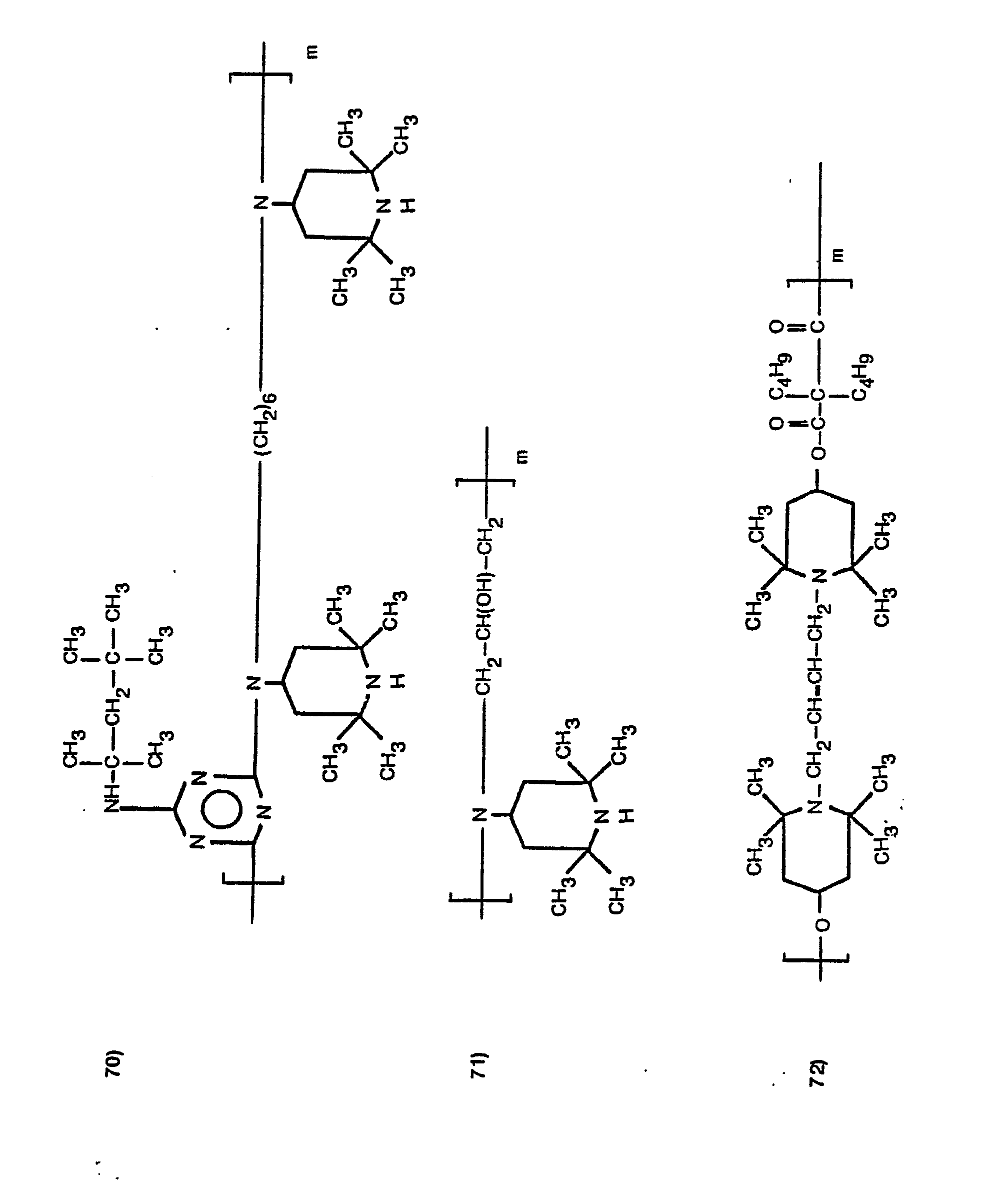

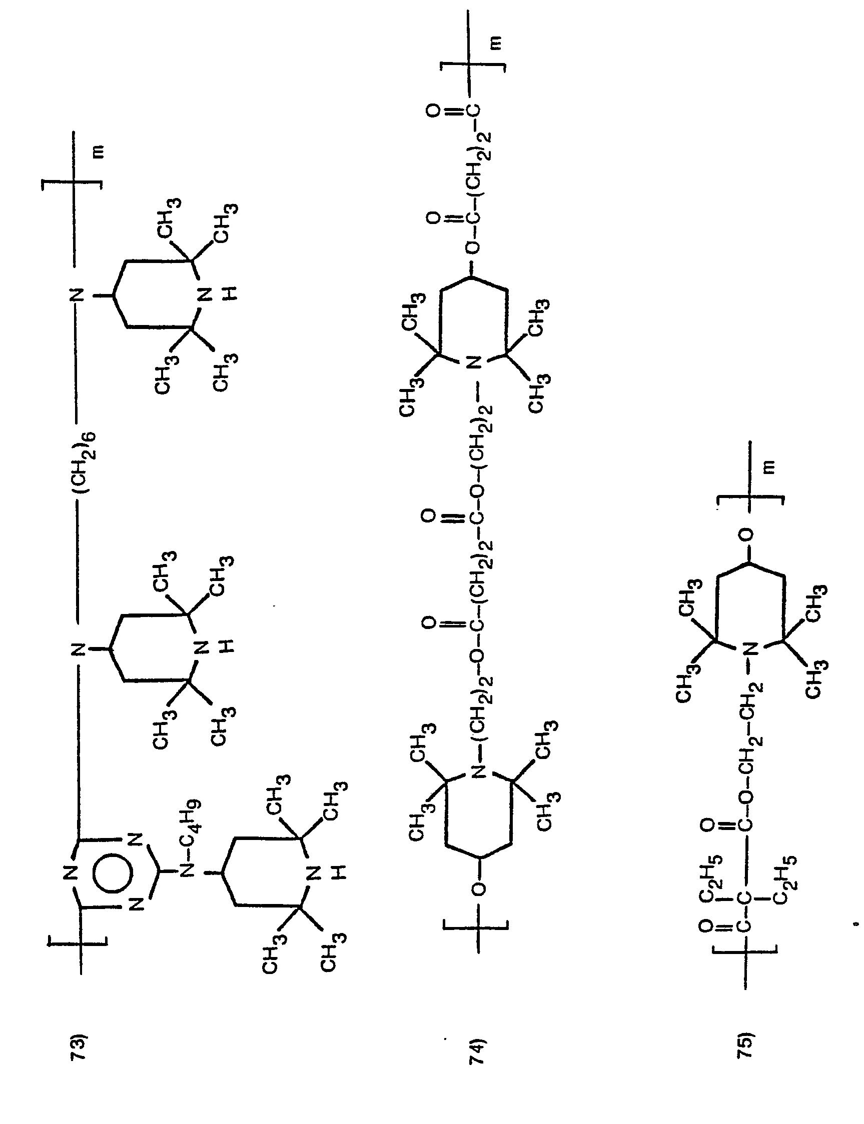

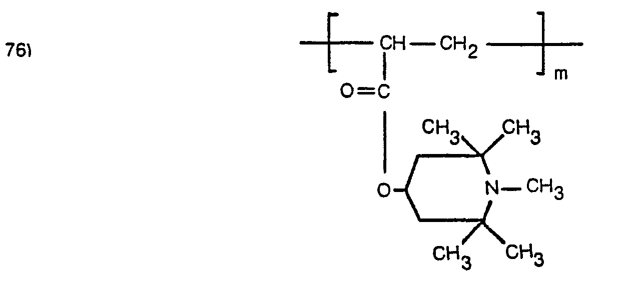

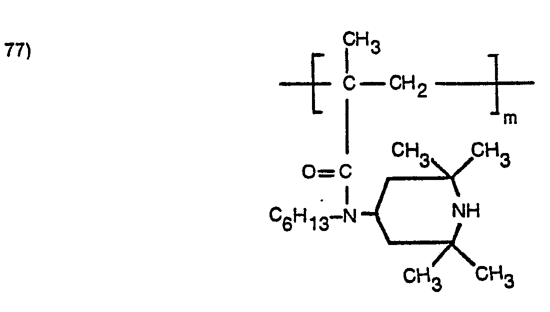

Es können auch Polyalkylpiperidinderivate der Klassen a)-f) verwendet werden, die mit dem Bindemittel des Lakkes chemische Bindungen eingehen. Dies ist der Fall, wenn das Polyalkylpiperidinderivat eine hierfür geeignete reaktive Gruppe besitzt, wie beispielsweise eine Glycidyl- oder eine Methylolgruppe.

Beispiele solcher Verbindungen sind die Methylol- bzw. Methyloläthergruppen enthaltende Polyalkylpiperidinderivate der Klasse g).

Soweit Polyalkylpiperidinverbindungen basische Verbindungen sind, können sie mit Säuren Salze bilden. Hierfür kommen beispielsweise anorganische Säuren oder organische Carbon-, Sulfon-, Phosphon- oder Phosphinsäuren in Frage, wie z.B. Chlorwasserstoffsäure, Borsäure, Phosphorsäure, Essigsäure, Salicylsäure, Toluolsulfonsäure oder Benzolphosphonsäure.

Die Polyalkylpiperidinverbindungen können mit komplexbildenden Metallverbindungen Komplexe bilden, beispielsweise mit Zink-II-acetat, Cobalt-II-acetylacetonat, Nickel-II-acetylacetonat, Aluminiumlll-acetylacetonat, Nickel-II-benzoat oder Aluminium-III-benzoylacetonat.

Die Acrylharzlacke, die erfindungsgemäss gegen Licht, Feuchtigkeit und Sauerstoff stabilisiert werden können sind die üblichen Acrylharzeinbrennlacke, wie sie beispielsweise in H. Kittel's Lehrbuch der Lacke und Beschichtungen, Band 1, Teil 2 auf den Seiten 735 und 742 (Berlin, 1972) bzw. in H. Wagner, H. F. Sarx, Lackkunstharze, auf den Seiten 229-235 beschrieben sind.

Besonders interessant ist die erfindungsgemässe Stabilisierung von Metalleffektlacken auf Basis heissvernetzbarer Polyacrylatharze, die einpolymerisiertes Styrol enthalten. Mit diesen Harzen liessen sich Metalleffektlacke mit hervorragenden physikalischen und chemischen Eigenschaften herstellen, wenn nicht in Abhängigkeit vom Gehalt an eingebautem Styrol eine Rissbildung bei der Bewitterung entstehen würde. Durch den erfindungsgemässen Zusatz von Polyalkylpiperidinderivaten insbesondere in Kombination mit einem herkömmlichen Lichtschutzmittel vom UV-Absorber-Typ ist jedoch überraschenderweise eine hervorragende Stabiliserung gegen die erwähnte Rissbildung möglich.

Ebenfalls von besonderem Interesse ist die erfindungsgemässe Stabilisierung von Metalleffektlacken auf Alkydharzbasis. Auch die Stabilisierung von Metalleffektlacken auf Alkydharzbasis mit den herkömmlichen Lichtschutzmitteln vom UV-Absorber-Typ ist problematisch und führt nicht zu einer befriedigenden technischen Lösung.

Durch den erfindungsgemässen Zusatz von Lichtschutzmitteln auf der Basis von Polyalkylpiperidinderivaten, gegebenenfalls zusammen mit weiteren Stabilisatoren, können nun auch Metalleffektlacke auf Alkydharzbasis durchaus befriedigend gegen Licht und Feuchtigkeit, insbesondere gegen Rissbildung, stabilisiert werden.

Die Alkydharzlacke, die erfindungsgemäss gegen die Einwirkung von Licht und Feuchtigkeit stabilisiert werden können, sind die üblichen Einbrennlacke, die insbesondere zur Lackierung von Automobilen (sogennante Automobillacke) verwendet werden, beispielsweise Lacke auf der Basis von Alkyd-Melaminharzen und Alkyd-Acryl-Melaminharzen.

Auch die Metalleffektlacke auf Basis von oelfreien Polyestern können erfindungsgemäss mit Erfolg stabilisiert werden.

Zur Erzielung des Metalleffektes werden die für diesen Zweck üblichen Aluminiumpigmente in einer Menge von 1 bis 10 Gew.-%, bezogen auf das lösungsmittelfreie Bindemittel (Lackharz) verwendet. Das Auftragen der erfindungsgemäss stabiliserten metalleffektlacke geschieht bevorzugt wie üblich nach zwei Verfahren, entweder nach dem Einschicht- oder nach dem Zweischichtverfahren. Im letzteren Falle wird zuerst die Aluminiumpigment enthaltende Schicht aufgetragen und dann darüber eine deckende Klarlackschicht.

Die Menge des zugesetzten Polyalkylpiperidinderivates beträgt dabei 0,01 bis 5 Gew.-%, bezogen auf das lösungsmittelfreie Bindemittel, vorzugsweise 0,5 bis 1 Gew.-%. Die Lacke können die üblichen organischen Lösungsmittel enthalten oder in Wasser gelöst oder dispergiert sein oder lösungsmittelfrei sein.

Bei der Verwendung in Zweischichtlackierungen kann das für die erfindungsgemässe Stabilisierung zu verwendende Polyalkylpiperidinderivat entweder nur im unpigmentierten Decklack oder sowohl im unpigmentierten Decklack wie auch im Aluminiumpigment enthaltenden Vorlegelack eingearbeitet werden. Bei der Herstellung von Acrylharzen bzw. von Acryl-modifizierten Alkydharzen können polymerisierbare Polyalkylpiperidinderivate (z.B. die Verbindung 7 und 39) in das Harz einpolymerisiert werden.

Der Einbau in das Lackbindemittel kann jedoch auch über Polykondensation bei der Herstellung oder eventuell beim Einbrennen der Melamin-, Alkyd- oder Polyesterharze erfolgen. Beispiele für einkondensierbare Polyalkylpiperidinderivate sind die Verbindungen 1, 26, 27, sowie das 1-Hydroxyäthyl-4-hydroxy-2,2,6,6-tetramethylpiperidin. Der Einbau über Polyaddition kann z.B. über die Reaktion freier Carboxylgruppen im Acrylharz mit Glycidylgruppen des Polyalkylpiperidinderivates folgen. Diese Carboxylgruppen können durch Einpolymerisation von Acrylsäure oder ihrer Derivate eingebaut werden.

In diesen Fällen besteht zusätzlich der Vorteil, dass die Lichtschutzmittel nicht durch Extraktion oder Migration entfernbar sind, so dass ihre Wirkung sehr lange anhält.

Für die Erzielung maximaler Lichtbeständigkeit kann die Mitverwendung von anderen üblichen Lichtschutzmitteln von Vorteil sein. Beispiele hierfür sind UV-Absorber vom Typ der Benzophenone, Oxalanilide, Benztriazole oder Acrylsäurederivate oder metallhatlige Lichtschutzmittel wie z.B. organische Nickelverbindungen.

Im Falle solcher Kombinationen beträgt die Summe aller Lichtschutzmittel 0,02 bis 5 Gew.-%, vorzugsweise 0,5 bis 2 Gew.-%, bezogen auf das Lackharz.

Weitere Zusatzstoffe, die im Lack enthalten sein können, sind Antioxydantien, beispielsweise solche vom Typ sterisch gehinderter Phenolderivate, organische Phosphorverbindungen, wie z.B. Phosphite, Phosphonite oder Phosphine, Weichmacher, Verlaufshilfsmittel, Härtungsbeschleuniger, wie z.B. organische Co-, Mn- oder Zr-Salze, Verdicker, Dispergiermittel oder Haftverbesserer.

Die folgenden Beispiele beschreiben die erfindungsgemässe Verwendung von Polyalkylpiperidinderivaten in Metalleffektlacken auf der Basis von Alkydharz enthaltenden Bindemittelsystemen. Teile bedeuten darin Gewichtsteile, Prozente bedeuten Gewichtsprozente.

### Beispiele

### Beispiel 1

### Lichtstabilisierung einer Zweischicht-Metalleffektlackierung (Rissbildungstest) auf der Basis von Alkydharz enthaltenden Bindemittelsystemen

### Grundrezeptur der Lacke

### a) Metalleffekt-Vorlegelack

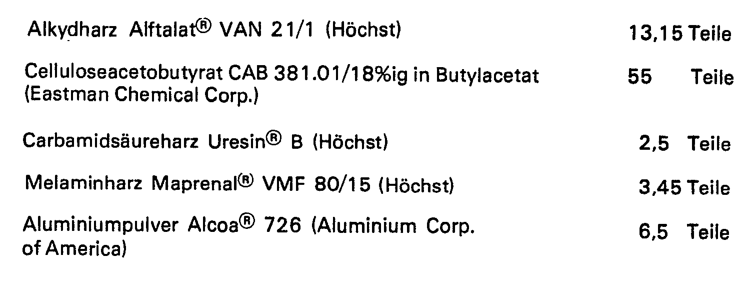

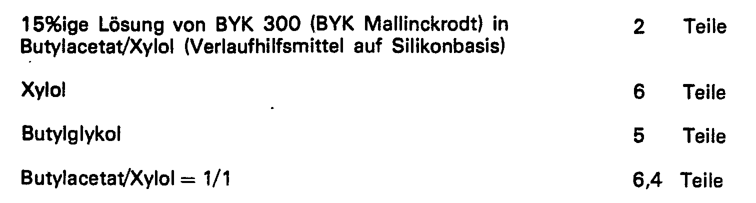

### b) unpigmentierter Decklack

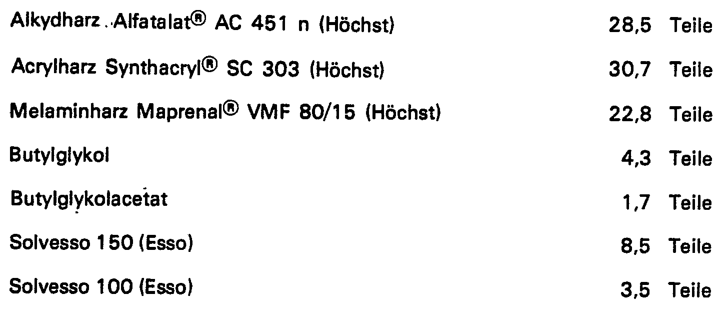

Der Vorlegelack wurde auf mit einem coil-coat beschichteten Aluminiumblech aufgespritzt (15-20 u). Nach kurzer Ablüftzeit wurde der Decklack nass in nass mit einer Schichtstärke von 30-40 µm aufgespritzt und nach einer Ablüftzeit von 15 Minuten bei 135°C während 20 Minuten eingebrannt.

Vor dem Auftragen wurde dem Decklack in der in Kolonne 1 der nachfolgenden Tabelle I jeweils in % (bezogen auf das Lackharz) angegebenen Menge die in Kolonne 2 angegebenen Polyalkylpiperidinverbindung zugegeben (Numeriert nach den in der Beschreibung erwähnten Beispielen).

Nach 4 Wochen Lagerung in einem klimatisierten Raum (23°C/50% rel. Feuchtigkeit) wurden die lackierten Bleche gemäss Prüfmethode ASTM G-53/77 in einem QUV-Tester 930 Stunden bewittert. Hierbei wurden die Proben jeweils 4 Stunden bei 50°C befeuchtet und 4 Stunden in feuchter Atmosphäre bei 60°C und UV-Licht bestrahlt.

Die Auswertung der bewitterten Lackproben erfolgte nach der TNO-Rissbildungsskala, Typ 353, wobei das Rissbild mit standardisierten Mustern vergliehen wurde. Die grossen Buchstaben geben die Art und Form der Rissbildung an. Die Zahlen geben die Intensität der Rissbildung an. Für die Bezeichnung der Intensität sind 10 Stufen gewählt worden; die Stufe der höchsten Intensität ist stets mit 10 angegeben. Die kleinen Buchstaben sind ein Massstab für die Risstiefe: a stellt eine oberflächliche Beschädigung der Deckschicht dar, b und c stellen Rissbildungen in Deckschicht bzw. Deck- und Grundschicht dar; d zeigt den Fall, wo zwar die untere Schicht, nicht aber die Deckschicht gerissen ist. In Kolonne 3 der Tabelle I ist das jeweilige Rissbild Charakterisiert.

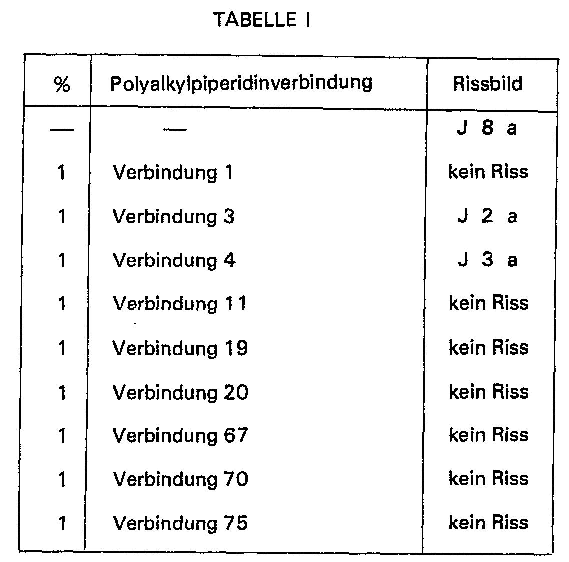

### Vergleichsversuch

### Metalleffektlacke auf der Basis von Alkydharz enthaltenden Bindemittelsystemen enthaltend als Lichtschutzmittel einen UV-Absorber

In einem Vergleichsversuch wurde genau wie für Beispiel 1 beschrieben vorgegangen, mit der einzigen Ausnahme, dass anstelle der Polyalkylpiperidinverbindung ein UV-Absorber verwendet wurde. In der nachstehenden Tabelle II ist in Kolonne 1 die Menge Lichtschutzmittel in % (bezogen auf das Lackharz), in Kolonne 2 das verwendete Lichtschutzmittel und in Kolonne 3 das Rissbild angegeben.

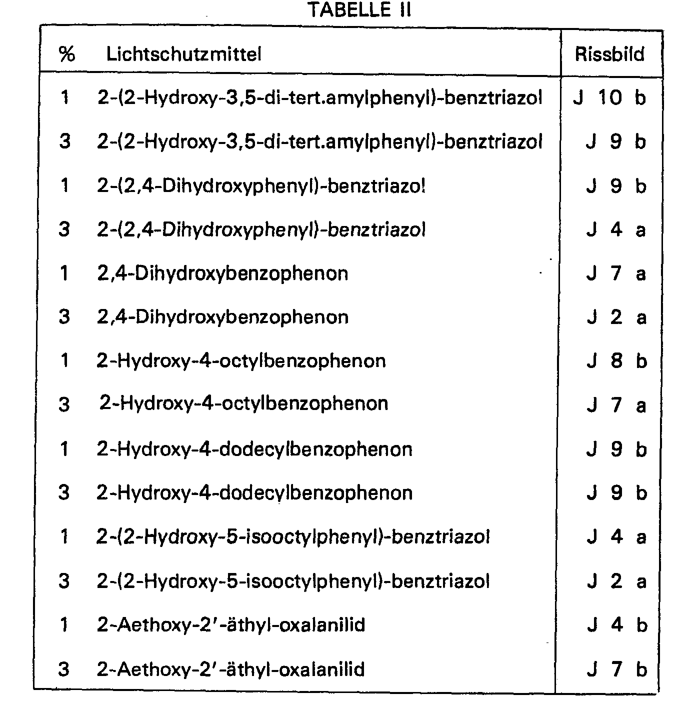

### Beispiel 2

### Kombination Polyalkylpiperidinderivate/UV-Absorber zur Stabilisierung einer Zweischicht-Metalleffektlackierung (Rissbildungstest) auf der Basis von Alkydharz enthaltenden Bindemittelsystemen

Metalleffektlackierungen wurden genau wie in Beispiel 1 beschrieben hergestellt und geprüft, mit der einzigen Ausnahme, dass zusammen mit dem Polyalkylpiperidinderivate auch ein UV-Absorber einverleibt wurde. In der nachstehenden Tabelle III sind in Kolonne 1 die Menge Lichtschutzmittel in % (bezogen auf das Lackharz), in Kolonne 2 die verwendeten Lichtschutzmittel und in Kolonne 3 das Rissbild angegeben.

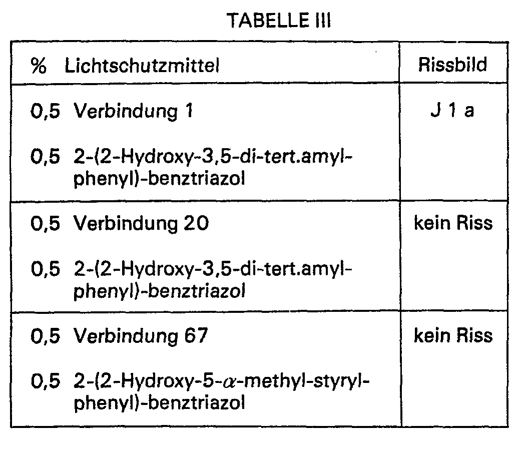

### Beispiel 3

### Kombination von Polyalkylpiperidinderivaten mit einer Metallverbindung zur Stabilisierung einer Zweischicht-Metalleffektlackierung (Rissbildungstest) auf der Basis von Alkydharz enthaltenden Bindemittelsystemen

Metalleffektlackierungen wurden genau wie in Beispiel 1 beschrieben hergestellt und geprüft, mit der einzigen Ausnahme, dass zusammen mit dem Polyalkylpiperidinderivat auch ein Metallsalz einverliebt wurde. In der nachstehenden Tabelle IV ist in Kolonne 1 die Menge Lichtschutzmittel bzw. Metallverbindung in % (bezogen auf das Lackharz), in Kolonne 2 die verwendeten Lichtschutzmittel und Metallverbindungen und in Kolonne 3 das Rissbild angegeben.

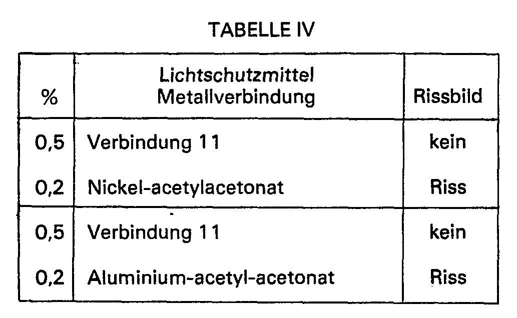

### Beispiel 4

Eine Metalleffektlackierung wurde genau wie in Beispiel 1 beschrieben hergestellt und geprüft, mit der einzigen Ausnahme, dass zusammen mit dem Polyalkylpiperidinderivat sowohl UV-Absorber, wie auch eine Metallverbindung einverliebt wurde. Zu
0,5% der Verbindung 11 wurden
0,5% 2-Hydroxy-3,5,-di-tert.-amyl-phenylbenztriazol und
0,2% Aluminium-acetylacetonat gegeben (%, bezogen auf das Lackharz).
Nach Bewitterung war keine Rissbildung zu sehen.

### Beispiel 5

### Lichtstabilisierung einer Zweischicht-Metalleffektlackierung (Glanzhaltungstest) auf der Basis von Acrylharz enthaltenden Bindemittelsystemen

### Grundrezeptur der Lacke

### a) Metalleffekt-Vorlegelack

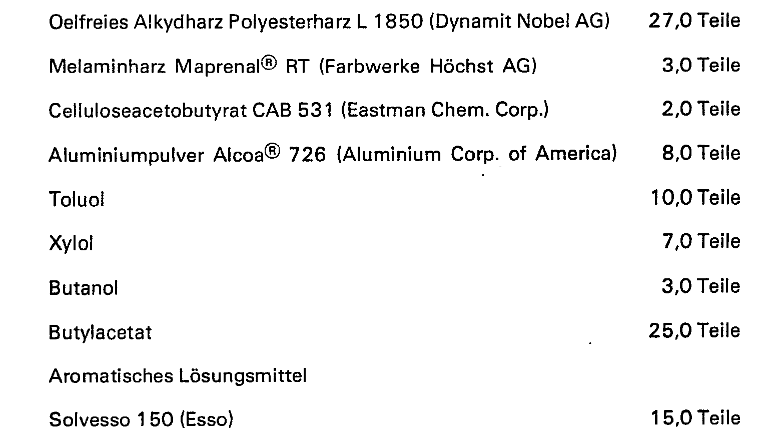

### b) Unpigmentierter Decklack

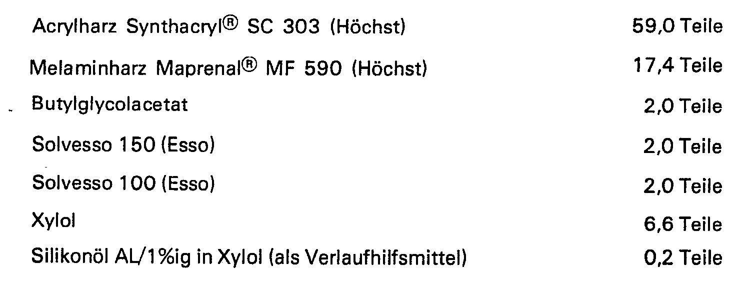

Auf ein 0,4 mm starkes Aluminiumblech wurde zunächst ein handelsüblicher Haftgrund (PRIMER) sowie ein handelsüblicher Zwischenfüller aufgebracht und eingebrannt. Auf diesen Lackunterbau wurde der aluminiumpigmententhaltende Vorlegelack mit einer Schichtstärke von ca. 15 µm aufgespritzt und auf diesen der unpigmentierte Decklack mit einer Schichtstärke von ca. 30-40 µm nass in nass aufgebracht. Nach kurzer Ablüftzeit wurden die Lacke im Lacktrockenschrank 30 Minuten bei 125°C eingebrannt. Es wurden 2 Proben hergestellt; die erste ohne Stabilisatorzusatz, die zweite mit einem Zusatz von 1% (bezogen auf das Lackharz) der Verbindung 11 im Decklack. Die so erhaltenen Bleche wurden vier Wochen im Normklima (23°C/5% relative Luftfeuchtigkeit) gelagert und anschliessend der Bewitterung im QUV-Gerät gemäss ASTM G 53--₇₇ unterzogen. Das nachfolgende Diagramm I gibt die in Abhängigkeit von der Bewitterungszeit erhaltenen Glanzwerte (ASTM D 523) der stabilisierten (0) bzt. unstabilisierten (X) Probe wieder.

### Beispiel 6

### Lichstabilisierung einer Zweischicht-Metalleffektlackierung auf Basis heissvernetzbarer Polyacrylatharze, die einpolymerisiertes Styrol enthalten

### Grundrezeptur der Lacke

### a) Metalleffekt-Vorlegelack

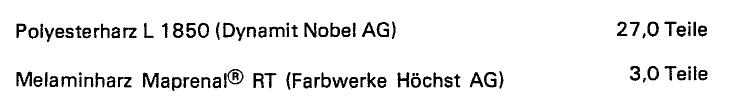

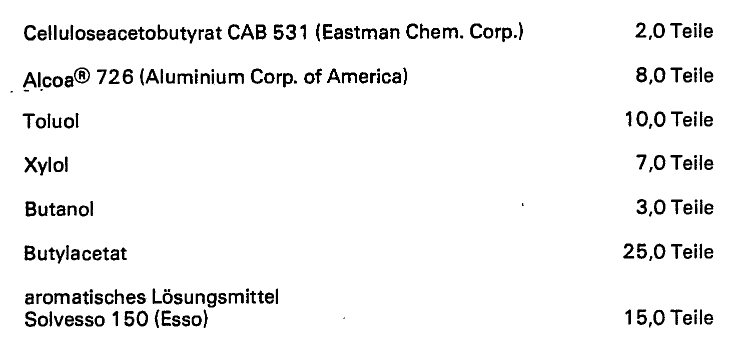

### b) Unpigmentierter Decklack

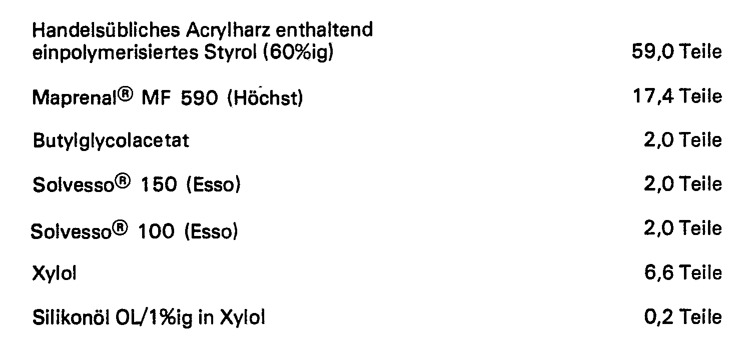

Auf mit einem coil-coat beschichteten Aluminiumblech wird der aluminiumpigment-enthaltende Vorlegelack mit einer Schichtstärke von ca. 15 µm aufgespritzt und auf diesen der unpigmentierte Decklack mit einer Schichtstärke von ca. 30-40 µm nass in nass aufgespritzt. Nach kurzer Ablüftzeit werden die Lacke im Lacktrockenschrank 30 Minuten bei 140°C eingebrannt. Die so erhaltenen Bleche werden 4 Wochen im Normklima (23°C/50% rel. Luftfeuchtigkeit) gelagert und anschliessend der Bewitterung im QUV-Gerät gemäss ASTM G 53-77 unterzogen, wie bereits in Beispiel 1 erwähnt.

In den unpigmentierten Decklack waren zuvor in der in Kolonne 1 der nachfolgenden Tabelle V jeweils in % (bezogen auf das Lachharz) angegeben Menge die in Kolonne 2 angegebenen Lichtschutzmittel zugegeben worden. In Kolonne 3 der Tabelle V ist die Bewitterungszeit angegeben und in Kolonne 4 das jeweilige Rissbild charakterisiert.

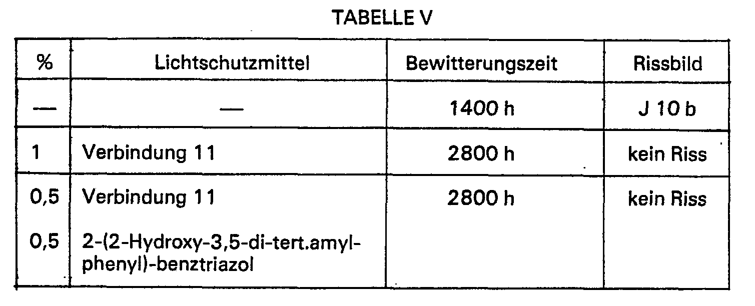

### Vergleichsversuch

### Metalleffektlacke auf Basis heissvernetzbarer Polyacrylatharze, die einpolymerisiertes Styrol enthalten, stabilisiert mit einem UV-Absorber

In einem Vergleichsversuch wurde genau wie für Beispiel 6 beschrieben vorgegangen, mit der einzigen Ausnahme, dass anstelle der Polyalkylpiperidinverbindung ein UV-Absorber verwendet wurde. In der nachstehenden Tabelle VI ist in Kolonne 1 die Menge Lichtschutzmittel in % (bezogen auf das Lackharz), in Kolonne 2 das verwendete Lichtschutzmittel, in Kolonne 3 die Bewitterungszeit und in Kolonne 4 das jeweilige Rissbild angegeben.

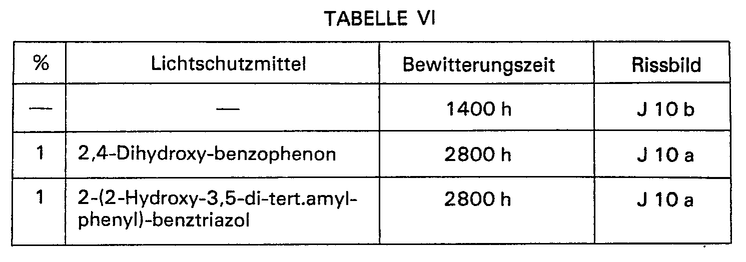

Aus der Tabelle V ergibt sich, dass bei Zusatz einer Polyalkylpiperidinverbindung als Stabilisator selbst bei einer Verdoppelung der Bewitterungszeit im QUV-Gerät noch keine Rissbildung im Gegensatz zur Nullprobe erhalten wurde. Dieser übberraschend gute Stabilisierungseffekt wurde, wie Tabelle VI zeigt, mit den vergleichsweise geprüften UV-Absorbern nicht erzielt.

Aus den nachfolgenden Diagrammen II und III ergibt sich, dass durch Kombination einer Polyalkylpiperidinverbindung mit einem UV-Absorber ein synergistischer Stabilisierungseffekt erzielt wird, der sich in einer deutlich besseren Glanzhaltung (nach ASTM D 523 bestimmt) und einem deutlich geringeren Gewichtsverlust niederschlägt.

### Beispiel 7

### Lichtstabilisierung einer Einschicht-Metalleffektlackierung (Glanzhaltungstest) auf der Basis von Acrylharz enthaltenden Bindemittelsystemen.

### Grundrezept des Lackes

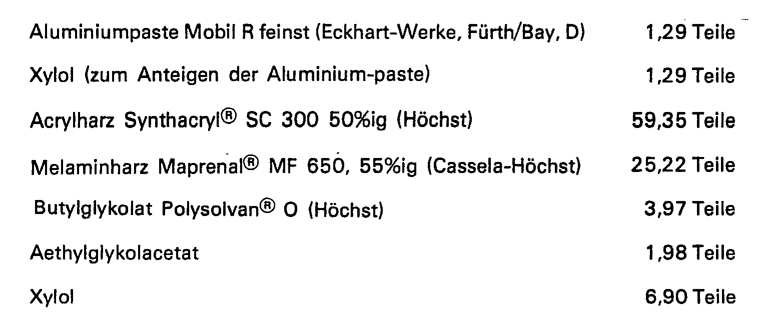

Mit 29,7 Teile DKH-Kunstharzverdünner (Dr. K. Herberts, Wuppertal, D) auf die Spritzviskosität von 19 sec. nach DIN 53211 einstellen.

Auf ein 0,4 mm starkes Aluminiumblech wurde zunächst ein handelsüblicher Haftgrund (PRIMER) sowie ein handelsüblicher Zwischenfüller aufgebracht und eingebrannt. Auf diesen Lackunterbau wurde der aluminiumpigmententhaltende Lack in 3 Kreuzgängen mit je 15 Sekunden ablüften, mit einer Schichtstärke von ca. 40 ,um aufgespritzt. Nach einer Ablüftzeit von 20 Minuten wurde der Lack im Lacktrockenschrank 25 Minuten bei 120°C eingebrannt.

Vor dem Auftragen wurde dem Lack in der in Kolonne 1 der nachfolgenden Tabelle VII jeweils in % (bezogen auf das Lackharz) angegebene Menge der bzw. die in Kolonne 2 angegebene Stabilisatoren zugegeben (Polyalkylpiperidinverbindungen numeriert nach den in der Beschriebung erwähnten Beispielen). Die so erhaltenen Bleche wurden vier Wochen im Normklima (23°C/5% relative Luftfeuchtigkeit) gelagert und anschliessend der Bewitterung im QUV-Gerät gemäss ASTM G-53/77 unterzogen. In der nachfolgenden Tabelle VII sind die in Abhängigkeit von der Bewitterungszeit (vor der Bewitterung, nach 350, 480 und 570 Stunden) erhaltenen Glanzwerte (ASTM D 523) angegeben.

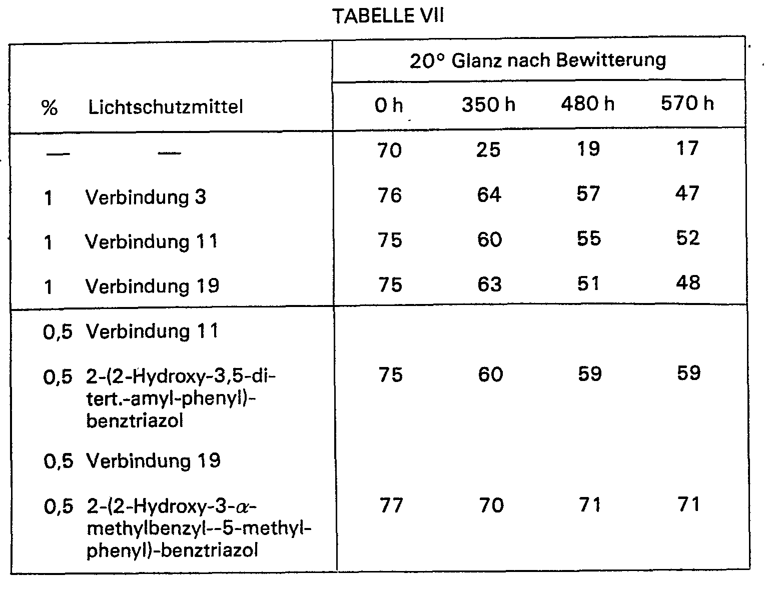

Analoge Ergebnisse erhält man auch bei der Verwendung von Polyalkylpiperidinderivaten in Kombination mit 2-(2-Hydroxy-3,5-di-α,α-dimethylbenzyl-phenyl)-benztriazol oder mit 2-[2-Hydroxy-3,5-di-(1,1,3,3-tetramethyl-butyl-phenyl)-benztriazol.

### Beispiel 8

### Ueber Addition einbaubares Lichtschutzmittel

Lichtstabilisierung einer Zweischicht-Metalleffektlackierung (Glanzhaltungstest) mit der Verbindung A der Formel

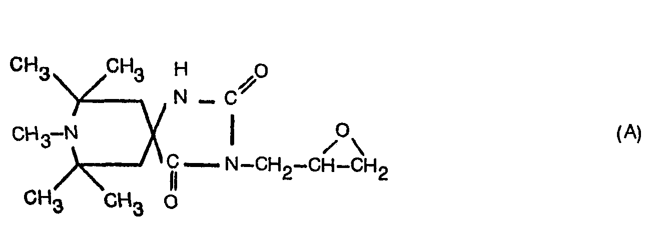

### Einarbeitung von Verbindung A in den unpigmentierten Decklack

Ein handelsüblicher Klarlack auf Basis eines mit Melamin/Formaldehyd-Harzen vernetzbaren Acrylharzes, das einpolymerisierte Acrylsäure neben Acrylsäureestern und Styrol enthält, wird mit der Verbindung A versetzt und über Nacht bei 40°C gerührt. Hierbei erfolgt der Einbau des Lichtschutzmittels durch Reaktion der Glycidylgruppe des Lichtschutzmittels mit den Säuregruppen im Acrylharz. Im Anschluss daran können gegebenenfalls weitere Lichtschutzmittel zugegeben werden (vgl. nachfolgende Tabelle VIII, Kolonne 2).

### Herstellung der Versuchsproben

Der wie oben beschrieben hergestellte Decklack wird nass in nass auf einem Aluminiumblech, auf das zuvor ein handelsüblicher Füll-Primer und der Metalleffekt-Vorlegelack aufgebracht wird, aufgespritzt und 30 Minuten bei 130°C eingebrannt. Die Schichtstärke des Vorlegelacks beträgt ca. 15 µm, die des Decklackes ca. 35 µm.

### Bewitterungsversuche

Nach 2 Wochen Lagerung der Bleche im Normklima werden die Proben gemäss Prüfmethode ASTM G53-77 in einem QUV-Tester 1000 Stunden bewittert.

In den unpigmentierten Decklack wurden in der in Kolonne 1 der nachfolgenden Tabelle VIII jeweils in % (bezogen auf das Lackharz) angagebenen Menge die in Kolonne 2 angegebenen Lichtschutzmittel zugegeben. Der Glanz der Lackoberfläche wurde anschliessend gemäss Prüfmethode ASTM D 523 gemessen, wovon die Werte in Kolonne 3 aufqezeichnet sind:

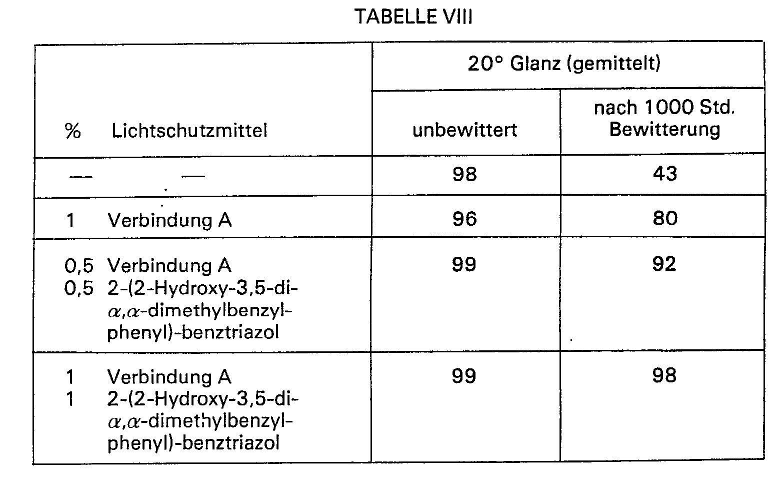

### Beispiel 9

### Ueber Polymerisation einbaubares Lichtschutzmittel

Lichtstabilisierung einer Zweischicht-Metalleffektlackierung mit der Verbindung B der Formel

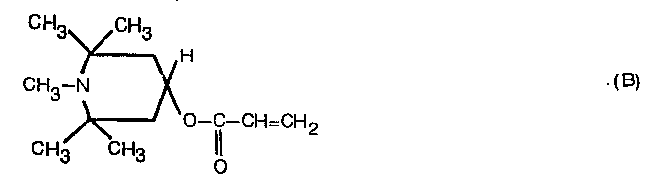

### Einarbeitung von Verbindung B in den unpigmentierten Decklack

Die verbindung der Formel B wird in einer Konzentration von ca. 30 Gew.-% (bezogen auf das Lackharz) in ein Acrylharz (copolymerisat aus Acrylsäureestern und Styrol) eingebaut. Hierbei wird die Verbindung der Formel B neben anderen (Meth)-Acrylsäureestern und Styrol als Comonomeres verwendet, wobei die Lösung in siedendes Xylol eingetragen und die Polymerisation mit Hilfe von Di- tert.-butyl-peroxid gestartet wird. Die Reaktionszeit beträgt ca. 4 Stunden. Das so hergestellte Acrylharz wird als Stabilisatorkonzentrat zur Herstellung des Decklackes verwendet. Hierzu wird das Stabilisatorkonzentrat gegebenenfalls mit weiteren Lichtschutzmitteln (vgl. Tabelle IX) einem handelsüblichen Klarlack (Acryl/Melamin-Harzgemisch) zugesetzt.

### Herstellung der Versuchsproben

Der wie oben beschrieben hergestellte Decklack wird nass in nass auf einem Aluminiumblech, auf das zuvor ein handelsüblicher Füll-Primer und der Metalleffekt-Vorlegelack aufgebracht wird, aufgespritzt und 30 Minuten bei 130°C eingebrannt. Die Schichtstärke des Vorlegelacks beträgt ca. 15 µm, die des Decklackes ca. 35 ,um.

### Bewitterungsversuche

Nach 2 Wochen Lagerung der Bleche im Normklima wurden die Proben im Xenotest 1200 bewittert und die Zeit bis zum Eintreten der Rissbildung im Decklack bestimmt.

In den unpigmentierten Decklack wurden in der in Kolonne 1 der nachfolgenden Tabelle IX jeweils in % (bezogen auf das Lackharz) angegebenen Menge die in Kolonne 2 angegebenen Lichtschutzmittel zugegeben. In Kolonne 3 ist die Zeit in Stunden bis zum Eintreten der Rissbildung angegeben.

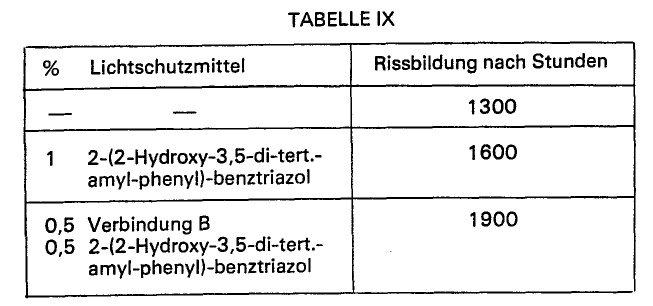

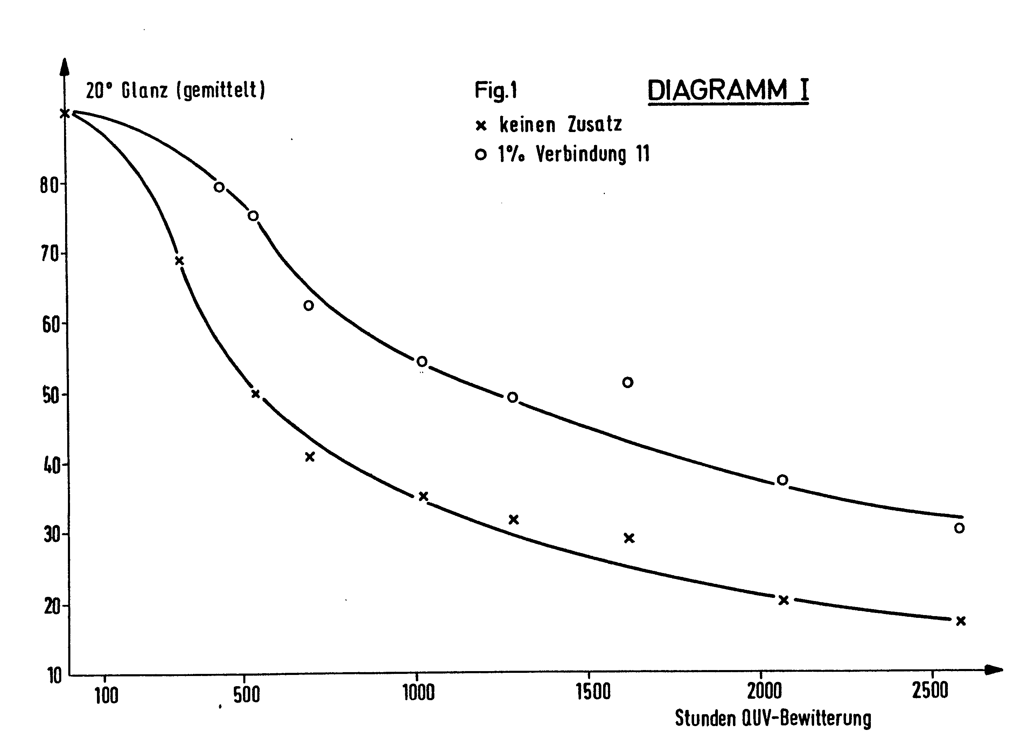

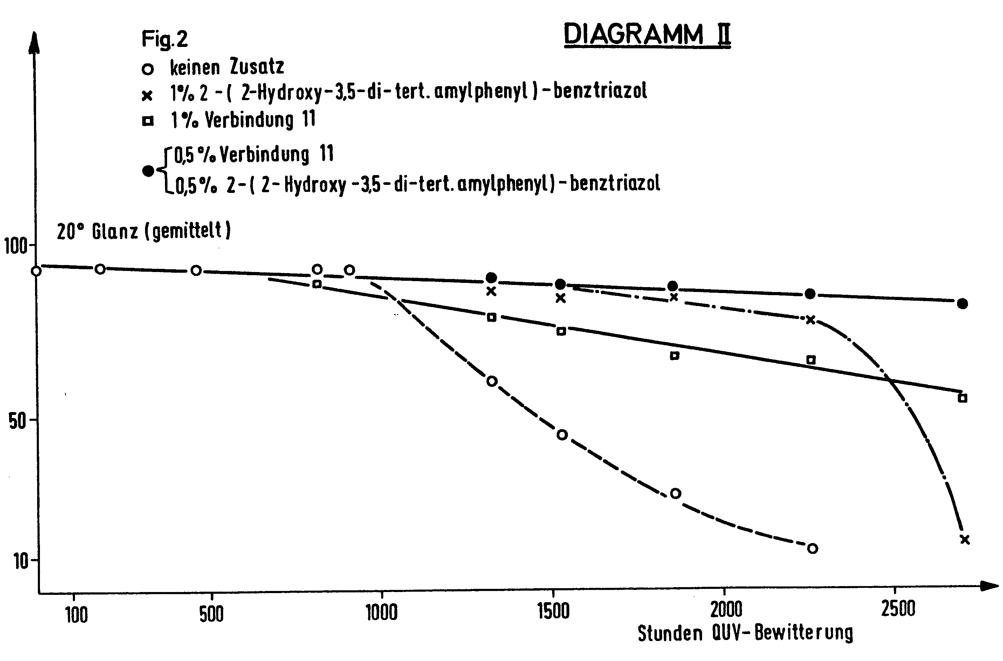

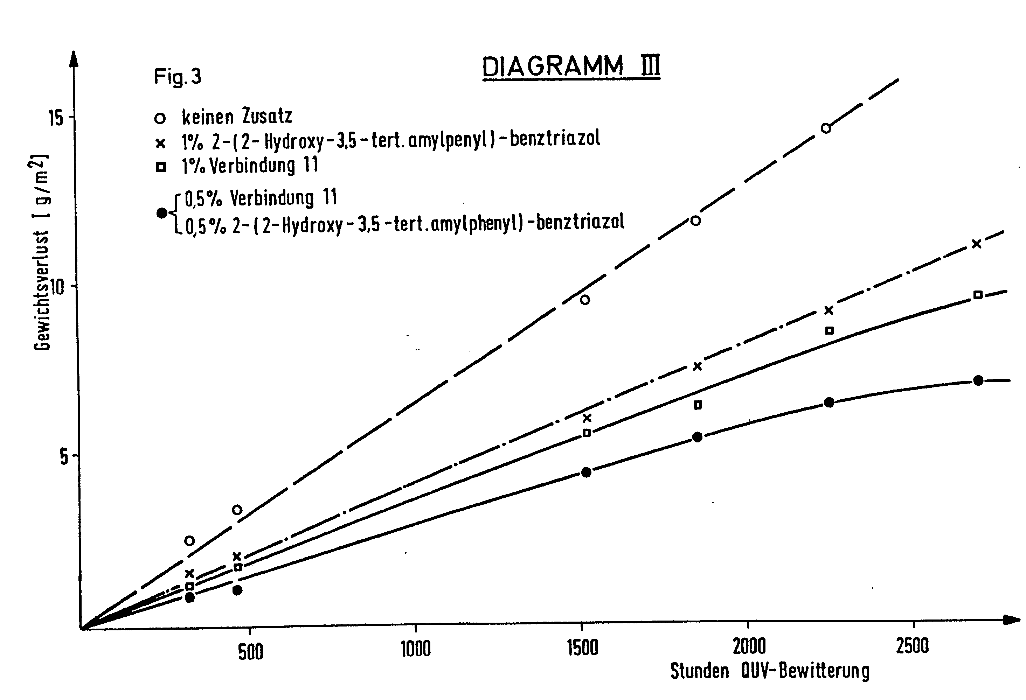

## Patentansprüche

1. Verwendung von 2,2,6,6-Tetraalkylpiperidinverbindungen, ihren Säureadditionssalzen oder Komplexen mit Metallverbindungen, gegebenenfalls zusammen mit weiteren Stabilisatoren zum Stabilisieren von Metalleffekteinbrennlacken auf der Basis heissvernetzbarer Alkyd- oder Acrylharze gegen die Einwirkung von Licht, Feuchtigkeit und Sauerstoff.

2. Verwendung gemäss Anspruch 1 von Lichtschutzmitteln der Formel (11) 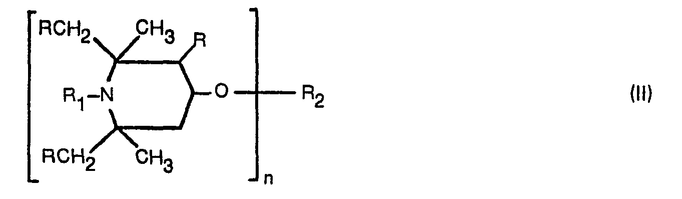 worin n die Zahlen 1-4 bedeutet, R Wasserstoff oder Methyl ist, R₁ Wasserstoff, Oxyl, C₁―C₁₈ Alkyl, C₃―C₈ Alkenyl, C₃―C₈ Alkinyl, C₇―C₁₂ Aralkyl, C₁―C₈ Alkanoyl, C₃―C₅ Alkenoyl, Glycidyl oder eine Gruppe -CH₂-CH(OH)-Z ist, worin Z Wasserstoff, Methyl oder Phenyl bedeutet und R_{z}, wenn n=1, Wasserstoff, gegebenenfalls durch ein oder mehrere Sauerstoffatome unterbrochenes C₁―C₁₈ Alkyl, Cyanäthyl, Benzyl, Glycidyl, einen einwertigen Rest einer aliphatischen, cycloaliphatischen, aralilphatischen oder aromatischen Carbonsäure, Carbaminsäure oder Phosphor enthaltenden Säure oder einen einwertigen Silylrest, wenn n=2, C₂―C₁₂ Alkylen, C₄―C₁₂ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, wenn n=3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest, wenn n=4, einen vierwertigen Rest einer aliphatischen, cycloaliphatischen oder aromatischen Tetracarbonsäure bedeutet.

3. Verwendung gemäss Anspruch 2 von Lichtschutzmitteln der Formel (II), worin n die Zahlen 1 oder 2 bedeutet, R Wasserstoff oder Methyl ist, R, Wasserstoff, C₁―C₁₂ Alkyl, Allyl, Benzyl, Acetyl, Acryloyl ist und R₂, wenn n=1, einen Rest einer aliphatischen Carbonsäure mit 2-18 C-Atomen, einer cycloaliphatischen Carbonsäure mit 5-12 C-Atomen oder einer aromatischen Carbonsäure mit 7-15 C-Atomen, wenn n=2, einen Rest einer aliphatischen Dicarbonsäure mit 2-36 C-Atomen, einer cycloaliphatischen oder aromatischen Dicarbonsäure mit 8-14 C-Atomen, einer aliphatischen, cycloaliphatischen oder aromatischen Dicarbaminsäure mit 8-14 C-Atomen bedeutet.

4. Verwendung gemäss Anspruch 1 von Lichtschutzmitteln der Formel (III) 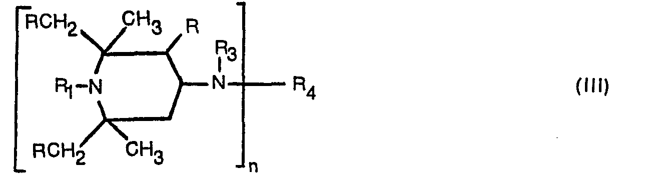 worin n die Zahlen 1 oder 2 bedeutet, R Wasserstoff oder Methyl ist, R, Wasserstoff, Oxyl, C₁―C₁₈ Alkyl, C₃―C₈ Alkenyl, C₃―C₈ Alkinyl, C₇―C₁₂ Aralkyl, C₁―C₈ Alkanoyl, C₃―C₅ Alkenoyl ist und R₃ Wasserstoff, C₁―C₁₂ Alkyl, C₅―C₇ Cycloalkyl, C₇―C₈ Aralkyl, C₂―C₁₈ Alkanoyl, C₃―C₅ Alkenoyl, Benzoyl ist und R₄, wenn n=1, Wasserstoff, C₁―C₁₈ Alkyl, C₅―C₇ Cycloalkyl, gegebenenfalls mit einer Cyano, Carbonyl oder Carbamidgruppe substituiertes C₂―C₈ Alkenyl, Glycidyl eine Gruppe der Formel ―CH₂―CH(OH)―Z oder der Formel ―CONH―Z, worin Z Wasserstoff, Methyl oder Phenyl bedeutet, wenn n=2, C₂―C₁₂ Alkylen, C₆―C₁₂ Arylen, Xylilen, eine ―CH₂―CH(OH)―CH₂―Gruppe oder eine Gruppe 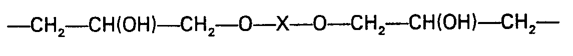 bedeutet, worin X C₂―C₁₀ Alkylen, C₆―C₁₅ Arylen, C₆―C₁₂ Cycloalkylen ist, oder, vorausgesetzt, dass R₃ nicht Alkanoyl, Alkenoyl oder Benzoyl bedeutet, R₄ aucheinen zweiwertigen Rest einer aliphatischen, cycloaliphatischen oder aromatischen Dicarbonsäure oder Dicarbaminsäure oder auch die Gruppe -CO- bedeuten kann, oder R₃ und R₄ zusammen, wenn n=1, den cyclischen Rest einer aliphatischen oder aromatischen 1, 2- oder 1,3-Dicarbonsäure sein können.

5. Verwendung gemäss Anspruch 1 von Lichtschutzmitteln der Formel (IV) 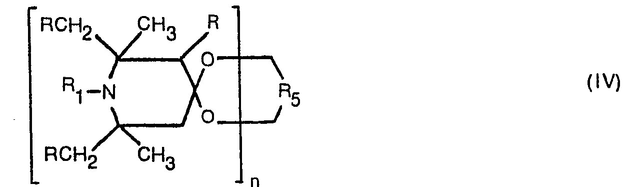 worin n die Zahlen 1 oder 2 bedeutet, R Wasserstoff oder Methyl ist, R₁ Wasserstoff, Oxyl, C₁―C₁₈ Alkyl, C₃―C₈ Alkenyl, C₃―C₈ Alkinyl, C₁―C₁₂ Aralkyl, C₁―C₈ Alkanoyl, C₃―C₅ Alkenoyl, R₅, wenn n=1, C₂―C₈ Alkylen oder Hydroxyalkylen, C₄―C₂₂ Acyloxyalkylen, wenn n=2, die Gruppe (―CH₂)₂C(CH₂―)₂ bedeutet.

6. Verwendung gemäss Anspruch 1 von Lichtschutzmitteln der Formel (V) 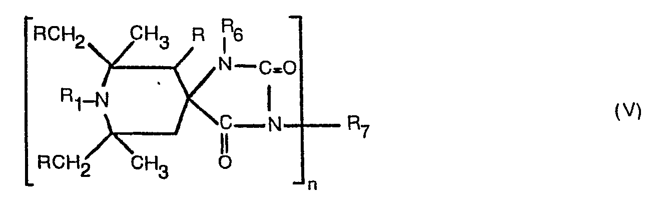 worin n die Zahlen 1 oder 2 bedeutet, R Wasserstoff oder Methyl ist, R₁ Wasserstoff, Oxyl, C₁―C₁₈ Alkyl, C₃―C₈ Alkenyl, C₃―C₈ Alkinyl, C₇―C₁₂ Aralkyl, C₁―C₈ Alkanoyl, C₃―C₅ Alkenoyl ist und R₆ Wasserstoff, C₁―C₁₂ Alkyl, Allyl, Benzyl, Glycidyl, C₂―C₆ Alkoxyalkyl ist und R₇, wenn n=1, Wasserstoff, C₁―C₁₂ Alkyl, C₃―C₅ Alkenyl, C₇―C₉ Aralkyl, C₅―C₇ Cycloalkyl, C₂―C₄ Hydroxyalkyl, C₂―C₆ Alkoxyalkyl, C₆―C₁₀ Aryl, Glycidyl, eine Gruppe der Formel ―(CH₂)ₘ―COO―O oder der Formel ―(CH₂)ₘ―O―CO―Q, worin m 1 oder 2 und Q C₁―C₄ Alkyl oder Phenyl sind, wenn n=2, C₂―C₁₂ Alkylen oder C₆―C₁₂ Arylen, eine Gruppe 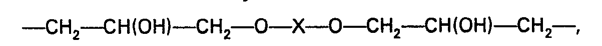 worin X C₂―C₁₀ Alkylen, C₆―C₁₅ Arylen, C₆―C₁₂ Cycloalkylen ist, oder eine Gruppe 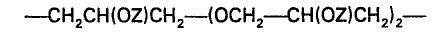 bedeutet, worin Z Wasserstoff, C₁―C₁₈ Alkyl, Allyl, Benzyl, C₂―C₁₂ Alkanoyl oder Benzoyl ist.

7. Verwendung gemäss Anspruch 1 von Lichtschutzmitteln der Formel (VI) 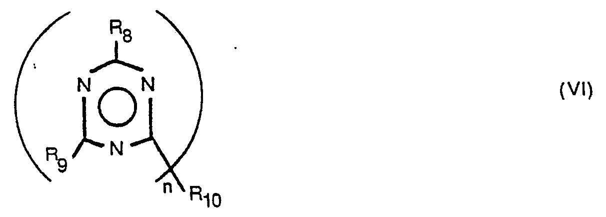 worin n die Zahlen 1 oder 2 ist und R₈ eine Gruppe der Formel 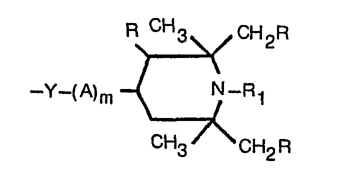 bedeutet, worin R die für Formel (I) angegebene Bedeutung hat, R₁ die unter a) angegebene Bedeutung hat, Y ―O― oder ―NR₁₁― ist, A C₂―C₆ Alkylen und m die Zahlen 0 oder 1 bedeuten, R₉ die Gruppen R₈, NR₁₁R₁₂, ―OR₁₃, ―NHCH₂OR₁₃ oder ―N(CH₂OR₁₃)₂ ist, R₁₀, wenn n=1 die Gruppen R₈ oder R₉ und wenn n=2 die Gruppe ―Y―Q―Y―, worin Q gegebenenfalls durch ―N(R₁₄)― unterbrochenes C₂―C₆ Alkylen bedeutet, R₁₁ C₁―C₁₂ Alkyl, Cyclohexyl, Benzyl oder C₁―C₄ Hydroxyalkyl oder eine Gruppe der Formel 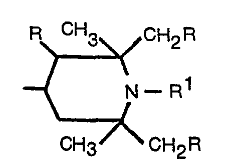 ist, R₁₂ C₁―C₁₂ Alkyl, Cyclohexyl, Benzyl, C₁―C₄ Hydroxyalkyl, R₁₃ Wasserstoff, C₁―C₁₂ Alkyl oder Phenyl und R₁₄ Wasserstoff oder die Gruppe ―CH₂OR₁₃ bedeuten oder R₁₁ und R₁₂ zusammen C₄―C₅ Alkylen oder Oxaalkylen sind oder auch R,, und R₁₂ jeweils eine Gruppe der Formel 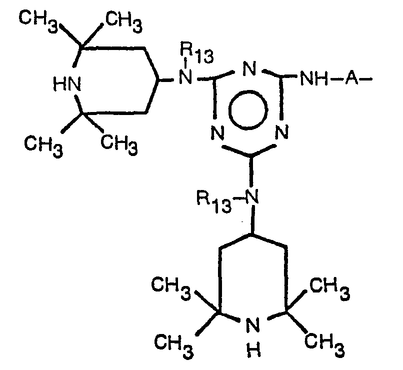 bedeuten.

8. Verwendung gemäss Anspruch 1 von Lichtschutzmitteln der Formel (VII) 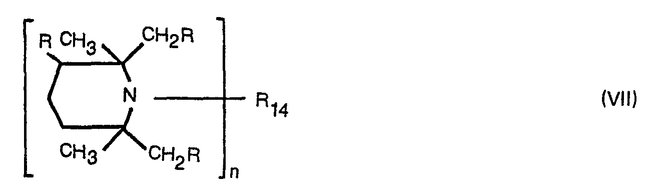 worin n die Zahlen 1 oder 2 bedeutet, R Wasserstoff oder Methyl ist und R,₄, wenn n=1, C₄―C₁₈ Alkyl, C₇―C₁₂ Aralkyl, die Gruppe ―CO―R₁₅, C₁―C₄ Alkyl substituiert durch ―CN, ―COOR₁₆, ―OH, ―OCOR₁₇ oder 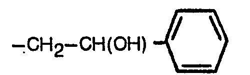 bedeutet, wobei R₁₅ C₁―C₁₂ Alkyl, C₂―C₄ Alkenyl oder Phenyl, R₁₆ C₁―C₁₈ Alkyl, R₁₇ C₁―C₁₈ Alkyl, C₂―C₁₀ Alkenyl, Cyclohexyl, Benzyl oder C₆―C₁₀ Aryl sind oder, wenn n=2, R₁₄ C₄―C₁₂ Alkylen, 2-Butenylen-1,4, Xylylen, die Gruppe 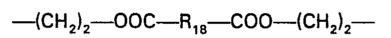 oder die Gruppe ―CH₂―OOC―R₁₉―COO―CH₂― ist, wobei R₁₈ C₂―C₁₀ Alkylen, Phenylen oder Cyclohexylen und R₁₉ C₂―C₁₀ Alkylen, Xylylen oder Cyclohexylen bedeuten.

9. Verwendung gemäss Anspruch 1 von Lichtschutzmitteln der Formel (VIII) 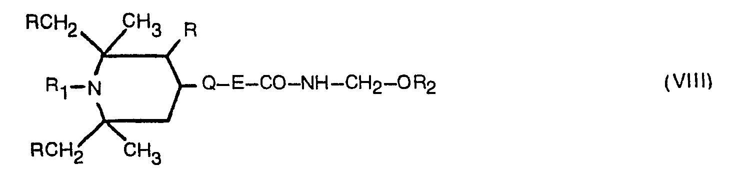 worin Q―N(R₃)― oder ―O― ist, E C₁―C₃ Alkylen, die Gruppe ―CH₂―CH(R₄)―O―, worin R₄ Wasserstoff, Methyl oder Phenyl ist, die Gruppe ―(CH₂)₃―NH―oder eine Einfachbindung bedeutet, R Wasserstoff oder Methyl, R₁ Wasserstoff, C₁―C₁₈ Alkyl, C₃―C₈ Alkenyl, C₃―C₈ Alkinyl, C₇―C₁₂ Aralkyl, C₁―C₈ Alkanoyl, C₃―C₅ Alkenoyl, Glycidyl, R₂ Wasserstoff oder C₁―C₁₈ Alkyl bedeuten, R₃ Wasserstoff, C₁―1_{,8} Alkyl, C₅―C₇ Cycloalkyl, C₇―C₁₂ Aralkyl, Cyanäthyl, C₆―C₁₀ Aryl, die Gruppe ―CH₂―CH(R₄)―OH, worin R₄ die oben angegebene Bedeutung hat, eine Gruppe der Formel 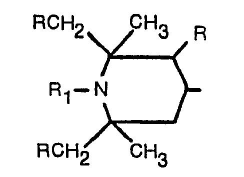 oder eine Gruppe der Formel 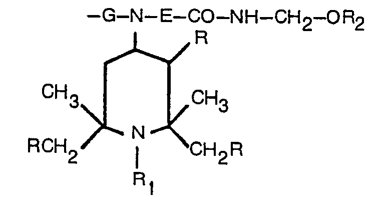 bedeutet, worin G C₂-C₆ Alkylen oder C₆-C₁₂ Arylen sein kann, oder R₃ eine Gruppe -E-CO-NH-CH₂-OR₂ ist.

10. Verwendung gemäss Anspruch 1, dadurch gekennzeichnet, dass man als Lichtschutzmittel polymere Verbindungen verwendet, deren wiederkehrende Struktureinheit einen 2,2,6,6-Tetraalkylpiperidinrest enthält, insbesondere Polyester, Polyäther, Polyamide, Polyamine, Polyurethane, Pₒₗy-harnstoffe, Polyaminotriazine, Poly(meth)acrylate, Poly(meth)acrylamide und deren Copolymeren, die solche Reste enthalten.

11. Verwendung nach einem der vorhergehenden Ansprüche, dadurch gekennzeichnet, dass man ein Säureadditionssalz einer 2,2,6,6-Tetraalkylpiperidinverbindung verwendet.

12. Verwendung nach einem der Ansprüche 1-10, dadurch gekennzeichnet, dass man einen Komplex einer 2,2,6,6-Tetraalkylpiperidinverbindung mit einer Metallverbindung verwendet.

13. Verwendung nach einem der vorhergehenden Ansprüche, dadurch gekennzeichnet, dass man die 2,2,6,6-Tetraalkylpiperidinverbindung in einer Menge von 0,01 bis 5 Gew.-%, bezogen auf das lösungsmittelfreie Bindemittel (Lackharz) verwendet.

14. Verwendung nach Anspruch 13, dadurch gekennzeichnet, dass man zusätzlich andere Lichtschutzmittel verwendet, deren Menge so gewählt wird, dass die Summe aller Lichtschutzmittel 0,02 bis 5 Gew.%, bezogen auf das lösungsmittelfreie Bindemittel (Lackharz), beträgt.

15. Verwendung nach einem der Ansprüche 13 oder 14, dadurch gekennzeichnet, dass als weitere Additive Antioxydantien, Weichmacher, Verlaufsmittel, Härtungsbeschleuniger, Verdicker, , Dispergiermittel oder Haftverbesserer zugegeben werden.

16. Verwendung gemäss Anspruch 1 zum Stabilisieren von Metalleffektlacken auf der Basis von heissvernetzbaren Polyacrylatharzen, die einpolymerisiertes Styrol enthalten.

17. Verwendung nach einem der vorhergehenden Ansprüche zum Stabilisieren von Einschicht-Metalleffektlackierungen.

18. Verwendung nach einem der Ansprüche 1-16 zum Stabilisieren von Zweischicht-Metalleffektlackierungen.

19. Verwendung nach einem der vorhergehenden Ansprüche zum Stabilisieren von AutomobilLacken.

## Revendications

1. Application de composés tétraalkyl-2,2,6,6 pipéridiniques, de leurs sels d'addition d'acides ou des complexes qu'ils forment avec des composés métalliques, éventuellement en association avec d'autres stabilisants, à la stabilisation de peintures métallisées à cuire à base de résines alkydes ou acryliques thermoréticulables, contre l'action de la lumière, de l'humidité et de l'oxygène.

2. Application selon la revendication 1 de stabilisants à la lumière répondant à la formule (II): 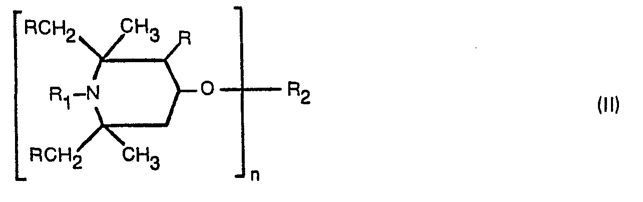 dans laquelle:
n est un nombre de 1 à 4,
R représente l'hydrogène ou un méthyle,
R, représente l'hydrogène, un oxyle, un alkyle en C₁-C₁₈, un alcényle en C₃-C₈, un alcynyle en C₃-C₈, un aralkyle en C₇-C₁₂, un alcanoyle en C₁-C₈, un alcénoyle en C₃-C₅, un glycidyle ou un radical -CH₂CH(OH)-Z dans lequel Z représente l'hydrogène, un méthyle ou un phényle, et
R₂ représente:
-lorsque n est égal à 1, l'hydrogène, un alkyle en C,-C_{'8} éventuellement interrompu par un ou plusieurs atomes d'oxygène, un cyanéthyle, un benzyle, un glycidyle, un radical univalent provenant d'un acide carboxylique aliphatique, cycloaliphatique, araliphatique ou aromatique, d'un acide carbamique ou d'un acide contenant du phosphore, ou un radical silyle univalent,
-lorsque n est égal à 2, un alkylène en C₂-C₁₂, un alcénylène en C₄-C₁₂, un xylylène, un radical bivalent provenant d'un acide dicarboxylique aliphatique, cycloaliphatique, araliphatique ou aromatique, d'un acide dicarbamique ou d'un acide contenant du phosphore, ou un radical silyle bivalent,
-lorsque n est égal à 3, un radical trivalent provenant d'un acide tricarboxylique aliphatique, cycloaliphatique ou aromatique, d'un acide tricarbamique aromatique ou d'un acide contenant du phosphore, ou un radical silyle trivalent, et
-lorsque n est égal à 4, un radical quadrivalent provenant d'un acide tétracarboxylique aliphatique, cycloaliphatique ou aromatique.

3. Application selon la revendication 2 de stabilisants à la lumière de formule (II) dans lesquels:
n représente le nombre 1 ou le nombre 2,
R représente l'hydrogène ou un méthyle,
R, représente l'hydrogène, un alkyle en C₁-C₁₂, un allyle, un benzyle, un acétyle ou un acryloyle, et
R₂ représente:
-lorsque n est égal à 1 un radical d'acide carboxylique aliphatique contenant de 2 à 18 atomes de carbone, d'acide carboxylique cycloaliphatique contenant de 5 à 12 atomes de carbone ou d'acide carboxylique aromatique contenant de 7 à 15 atomes de carbone et
-lorsque n est égal à 2 un radical d'acide dicarboxylique aliphatique contenant de 2 à 36 atomes de carbone, d'acide dicarboxylique cycloaliphatique ou aromatique contenant de 8 à 14 atomes de carbone ou d'acide dicarbamique aliphatique, cycloaliphatique ou aromatique contenant de 8 à 14 atomes de carbone.

4. Application selon la revendication 1 de stabilisants à la lumière répondant à la formule (III): 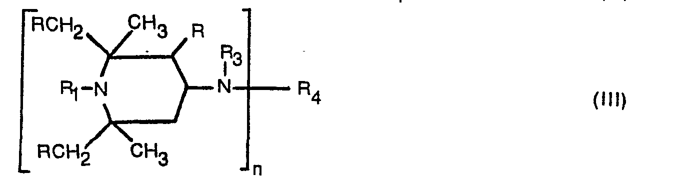 dans laquelle:
n représente le nombre 1 ou le nombre 2,
R représente l'hydrogène ou un méthyle,
R, représente l'hydrogène, un oxyle, un alkyle en C₁-C₁₈, un alcényle en C₃-C₈, un alcynyle en C₃-C₈, un aralkyle, en C₇-C₁₂, un alcanoyle en C₁-C₈ ou un alcénoyle en C₃-C₅,
R₃ représente l'hydrogène, un alkyle en C₁-C₁₂, un cycloalkyle en C₅-C₇, un aralkyle en C₇ ou C₈, un alcanoyle en C₂-C₁₈ un alcénoyle en C₃-C₅ ou un benzoyle, et
R₄ représente:
-lorsque n est égal à 1, l'hydrogène, un alkyle en C₁-C₁₈, un cycloalkyle en C₅-C₇, un alcényle en C₂-C₈ éventuellement porteur d'un radical cyano, carbonyle ou carbamoyle, un glycidyle, ou un radical de formule -CH₂CH(OH)-Z ou de formule -CONH-Z dans lesquelles Z représente l'hydrogène, un méthyle ou un phényle, et
-lorsque n est égal à 2, un alkylène en C₂-C₁₂, un arylène en C₆-C₁₂, un xylylène, un radical -CH₂-CH(OH)-CH₂-, un radical: 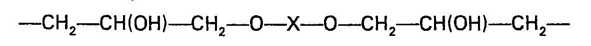 (dans lequel X représente un alkylène en C₂-C₁₀, un arylène en C₆-C₁₅ ou un cycloalkylène en C₆-C₁₂), ou, lorsque R₃ n'est ni un alcanoyle ni un alcénoyle ni un benzoyle, R₄ peut aussi représenter un radical bivalent provenant d'un acide dicarbamique ou d'un acide dicarboxylique aliphatique, cycloaliphatique ou aromatique ou encore le radical -CO-, ou
R₃ et R₄ peuvent aussi, dans le cas où n est égal à 1, former ensemble le radical cyclique d'un acide dicarboxylique-1,2- ou -1,3 aliphatique ou aromatique.

5. Application selon la revendication 1 de stabilisants à la lumière répondant à la formule (IV): 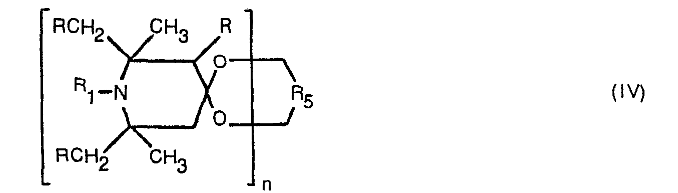 dans laquelle n représente le nombre 1 ou le nombre 2, R l'hydrogène ou un méthyle, R, représente l'hydrogène, un oxyle, un alkyle en C₁-C₁₈, un alcényle en C₃-C₈, un alcynyle en C₃-C₈, un aralkyle en C₇-C₁₂, un alcanoyle en C₁-C₈ ou un alcénoyle en C₃-C₅, et Rₛ représente, dans le cas où n est égal à 1, un hydroxyalkylène ou un alkylène en C₂-C₈ ou un acyloxyalkylène en C₄-C₂₂ et, lorsque n est égal à 2, un radical

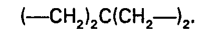

6. Application selon la revendication 1 de stabilisants à la lumière répondant à la formule (V): 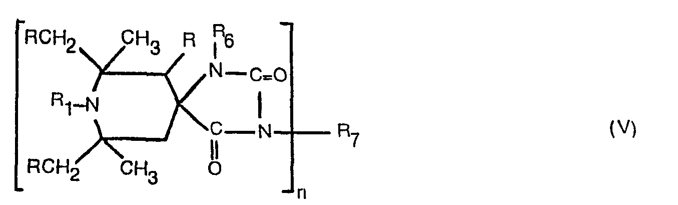 dans laquelle:
n représente le nombre 1 ou le nombre 2,
R représente l'hydrogène ou un méthyle,
R, représente l'hydrogène, un oxyle, un alkyle en C₁-C₁₈, un alcényle en C₃-C₈, un alcynyle en C₃-Cₐ, un aralkyle en C₇-C₁₂, un alcanoyle en C₁-C₈ ou un alcénoyle en C₃-C₅,
Rₛ représente l'hydrogène, un alkyle en C₁-C₁₂, un allyle, un benzyle, un glycidyle ou un alcoxyalkyle en C₂-C₆, et
R₇ représente:
-lorsque n est égal à 1, l'hydrogène, un alkyle en C₁-C₁₂, un alcényle en C₃-C₅, un aralkyle en C₇-C₉, un cycloalkyle en C₅-C₇, un hydroxyalkyle en C₂-C₄, un alcoxyalkyle en C₂-C₆, un aryle en C₆-C₁₀, un glycidyle ou un radical de formule -(CH₂)ₘ-COO-Q ou de formule -(CH₂)ₘ-O-CO-Q dans lesquelles m est égal à 1 ou à 2 et Q représente un alkyle en C₁-C₄ ou un phényle, et
-lorsque n est égal à 2, un alkylène en C₂-C₁₂, un arylène en C₆-C₁₂, un radical: 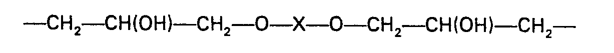 (dans lequel X représente un alkylène en C₂-C₁₀, un arylène en C₆-C₁₅ ou un cycloalkylène en C₆-C₁₂, ou un radical: 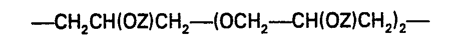 (dans lequel Z représente l'hydrogène, un alkyle en C₁-C₁₈, un allyle, un benzyle, un alcanoyle en C₂-C₁₂ ou un benzoyle).

7. Application selon la revendication 1 de stabilisants à la lumière répondant à la formule (VI): 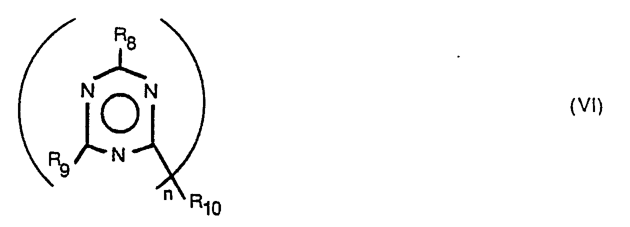 dans laquelle:
n représente le nombre 1 ou le nombre 2,
R₈ représente un radical de formule: 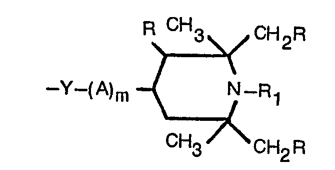 dans laquelle R représente l'hydrogène ou un méthyle, R, a la signification donnée à la revendication 2, X représente -0- ou -NR₁₁-, A représente un alkylène en C₂-C₈ et m représente le nombre 0 ou le nombre 1,
R₉ représente un radical R₈, -NR₁₁R₁₂, -OR₁₃, -NHCH₂OR₁₃ ou -N(CH₂OR₁₃)₂, et
R₁₀ représente:
-lorsque n est égal à 1, un radical R₈ ou R₉ et
-lorsque n est égal à 2, un radical Y-Q-Y- dans lequel Q représente un alkylène en C₂-C₆, éventuellement interrompu par -N(R₁₄)-,
R₁₁ représente un alkyle en C₁-C₁₂, un cyclohexyle, un benzyle, un hydroxyalkyle an C₁-C₄ ou un radical de formule: 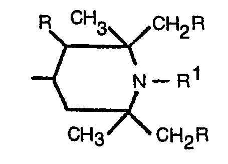
R₁₂ représente un alkyle en C₁-C₁₂, un cyclohexyle, un benzyle ou un hydroxyalkyle en C,-C₄,
R₁₃ représente l'hydrogène, un alkyle en C₁-C₁₂ ou un phényle, et
R₁₄ représente l'hydrogène ou un radical -CH₂OR₁₃, ou
R₁₁ et R₁₂ forment ensemble un alkylène en C₄ ou C₅ ou un oxa-alkylène ou
R₁₁ et R₁₂ représentent chacun un radical de formule:

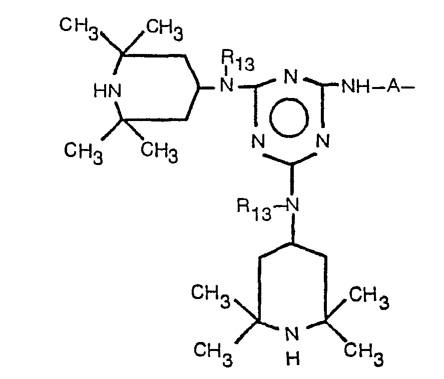

8. Application selon la revendication 1 de stabilisants à la lumière répondant à la formule (VII): 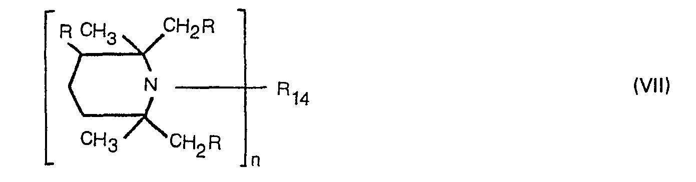 dans laquelle:
n représente le nombre 1 ou le nombre 2,
R représente l'hydrogène ou un méthyle et
R₁₄ représente:
-lorsque n est égal 1, un alkyle en C₄-C₁₈, un aralkyle en C₇-C₁₂, un radical -CO-R₁₅, un alkyle en C₁-C₄ porteur d'un radical -CN, -COOR₁₆, -OH, -OCOR₁₇ ou 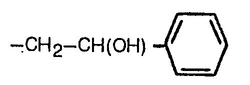 R₁₅ représentant un alkyle en C₁-C₁₂, un alcényle en C₂-C₄ ou un phényle, R₁₆ un alkyle en C₁-C₁₈, R₁₇ un alkyle en C₁-C₁₈, un alcényle en C₂-C₁₀, un cyclohexyle, un benzyle ou un aryle en C₆-C₁₀, et
-lorsque n est égal à 2, un alkylène en C₄-C₁₂, un butène-2 ylène-1,4, un xylylène, un radical 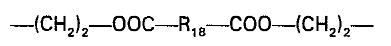 ou un radical -CH₂-OOC-R₁₉-COO-CH₂- dans lesquels R₁₈ représente un alkylène en C₂-C₁₀, un phénylène ou un cyclohexylène et R₁₉ un alkylène en C₂-C₁₀, un xylylène ou un cyclohexylène.

9. Application selon la revendication 1 de stabilisants à la lumière répondant à la formule (VIII): 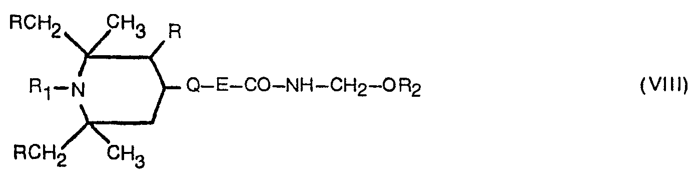 dans laquelle Q représente -N(R₃)- ou -0-, E représente un alkylène en C,-C₃, un radical -CH₂-CH(R₄)-0- dans lequel R₄ représente l'hydrogène, un méthyle ou un phényle, un radical -(CH₂)₃-NH- ou une liaison simple, R représente l'hydrogène ou un méthyle, R, représente l'hydrogène, un alkyle en C₁-C₁₈, un alcényle en C₃-C₈, un alcynyle en C₃-C₈, un aralkyle en C₇-C₁₂, un alcanoyle en C₁-C₈, un alcénoyle en C₃-C₅ ou un glycidyle, R₂ représente l'hydrogène ou un alkyle en C₁-C₁₈, R₃ représente l'hydrogène, un alkyle en C₁-C₁₈, un cycloalkyle en C₅-C₇, un aralkyle en C₇-C₁₂, un cyanéthyle, un aryle en C₆-C₁₀, un radical -CH₂CH(R₄)-OH dans lequel R₄ a la signification indiquée ci-dessus, un radical de formule: 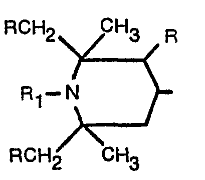 ou un radical répondant à la formule: 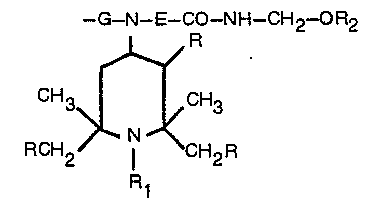 dans laquelle G représente un alkylène en C₂-C_{S} ou un arylène en C₆-C₁₂, ou R₃ représente un radical -E-CO-NH-CH₂-OR₂.

10. Application selon la revendication 1 caractérisée en ce qu'on utilise, comme stabilisants à la lumière, des composés polymères dont le motif répété contient un radical tétraalkyl-2,2,6,6 pipéridinique, plus particulièrement des polyesters, des polyéthers, des polyamides, des polyamines, des polyuréthannes, des polyurées, des polyaminotriazines, des polyacrylates, des polyméthacrylates, des polyacrylamides, des polyméthacrylamides et leurs copolymères, qui contiennent de tels radicaux.

11. Application selon l'une quelconque des revendications précédentes, caractérisée en ce qu'on utilise un sel d'addition d'acide d'un composé tétraalkyl-2,2,6,6 pipéridinique.

12. Application selon l'une quelconque des revendications 1 à 10, caractérisée en ce qu'on utilise un complexe formé par un composé tétraalkyl-2,2,6,6 pipéridinique avec un composé métallique.

13. Application selon l'une quelconque des revendications précédentes, caractérisée en ce qu'on utilise le composé tétraalkyl-2,2,6,6 pipéridinique en une quantité de 0,01 à 5% en poids par rapport au feuillogène (résine pour peinture ou vernis) dépourvu de solvant.

14. Application selon la revendication 13, caractérisée en ce qu'on utilise en outre d'autres stabilisants à la lumière dont la quantité est choisie de telle façon que la somme des quantités de tous les stabilisants à la lumière soit comprise entre 0,02 et 5% en poids par rapport au feuillogène (résine pour peinture ou vernis) dépourvu de solvant.

15. Application selon l'une des revendications 13 et 14, caractérisée en ce qu'on ajoute, comme additifs supplémentaires, des anti-oxydants, des plastifiants, des agents de nivellement, des accélérateurs de durcissement, des épaississants, des dispersants ou des renforçateurs d'adhérence.

16. Application selon la revendication 1 à la stabilisation de peintures métallisées à base de résines polyacryliques thermoréticulables qui renferment du styrène incorporé par polymérisation.

17. Application selon l'une quelconque des revendications précédentes pour la stabilisation de peintures métallisées à une seule couche.

18. Application selon l'une quelconque des revendications 1 à 16, pour la stabilisation de peintures métallisées à deux couches.

19. Application selon l'une quelconque des revendications précédentes pour la stabilisation de peintures pour automobiles.

## Claims

1. Use of 2,2,6,6-tetraalkylpiperidine compounds, of their acid addition salts or complexes with metal compounds, optionally together with further stabilisers, for stabilising metallic stoving lacquers based on hot-crosslinkable alkyd resins or acrylic resins against the action of light, moisture and oxygen.

2. Use according to Claim 1 of a light stabiliser of the formula (11) 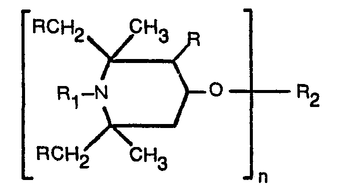 in which n is a number from 1-4 inclusive; R is hydrogen or methyl; R, is hydrogen, oxyl, C₁-C₁₈ alkyl, C₃-C₈ alkenyl, C₁-C₈ alkynyl, C₇-C₁₂ aralkyl, C₁-C₆ alkanoyl, C₃-C₅ alkenoyl, glycidyl or a group -CH₂-CH(OH)-Z wherein Z is hydrogen, methyl or phenyl; and R₂ when n is 1 is hydrogen, C₁-C₁₈ alkyl optionally interrupted by one or more oxygen atoms, cyanoethyl, benzyl, glycidyl, a monovalent radical of an aliphatic, cycloaliphatic, araliphatic or aromatic carboxylic acid, or of carbamic acid or of a phosphorus-containing acid, or a monovalent silyl radical; R₂ when n is 2 is C₂-C₁₂ alkylene, C₄-C₁₂ alkenylene, xylylene, a bivalent radical of an aliphatic, cycloaliphatic, araliphatic or aromatic dicarboxylic acid, of dicarbamic acid or of a phosphorus-containing acid, or a bivalent silyl radical; R₂ when n is 3 is a trivalent radical of an aliphatic, cycloaliphatic or aromatic tricarboxylic acid, of an aromatic tricarbamic acid or of a phosphorus-containing acid, or a trivalent silyl radical; and R₂ when n is 4 is a tetravalent radical of an aliphatic, cycloaliphatic or aromatic tetracarboxylic acid.

3. Use according to Claim 2 of a light stabiliser of the formula (II) in which n is the number 1 or 2; R is hydrogen or methyl; R, is hydrogen, C₁-C₁₂ alkyl, allyl, benzyl, acetyl or acyloyl; and R₂ when n is 1 is a radical of an aliphatic carboxylic acid having 2-18 C atoms, of a cycloaliphatic carboxylic acid having 5-12 C atoms or of an aromatic carboxylic acid having 7-15 C atoms; and R₂ when n is 2 is a radical of an aliphatic dicarboxylic acid having 2-36 C atoms, of a cycloaliphatic or aromatic dicarboxylic acid having 8-14 C atoms, or of an aliphatic, cycloaliphatic or aromatic dicarbamic acid having 8-14 C atoms.

4. Use according to Claim 1 of a light stabiliser of the formula (III) 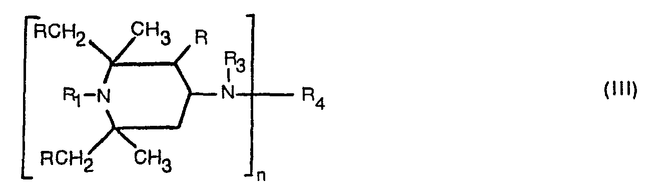 in which n is the number 1 or 2; R is hydrogen or methyl; R, is hydrogen, oxyl, C₁-C₁₈ alkyl, C₃-C₈ alkenyl, C₃-C₈ alkynyl, C₇-C₁₂ aralkyl, C,-Cₛ alkanoyl or C₃-C₅ alkenoyl; R₃ is hydrogen, C₁-C₁₂ alkyl, C₅-C₇ cycloalkyl, C₇-C₈ aralkyl, C₂-C₁₈ alkanoyl, C₃-C₅ alkenoyl or benzoyl; and R₄ when n is 1 is hydrogen, C₁-C₁₈ alkyl, C_{S}-C₇ cycloalkyl, C₂-C₈ alkenyl which is unsubstituted or substituted by a cyano, carbonyl or carbamide group, or it is glycidyl, a group of the formula -CH₂-CH(OH)-Z or of the formula -CONH-Z wherein Z is hydrogen, methyl or phenyl; or R₄ when n is 2 is C₂-C₁₂ alkylene, C₆-C₁₂ arylene, xylilene, a -CH₂-CH(OH)-CH₂- group or a group 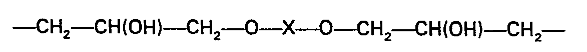 wherein X is C₂C₁₀ alkylene, C₆-C₁₅ arylene or C₆-C₁₂ cycloalkylene; or, provided that R₃ is not alkanoyl, alkenoyl or benzoyl, R₄ can also be a bivalent radical of an aliphatic, cycloaliphatic or aromatic dicarboxylic acid or dicarbamic acid, or can also be the group -CO-; or R₃ and R₄ teogether when n is 1 can be the cyclic radical of an aliphatic or aromatic 1,2- or 1,3-dicarboxylic acid.

5. Use according to Claim 1 of a light stabiliser of the formula (IV) 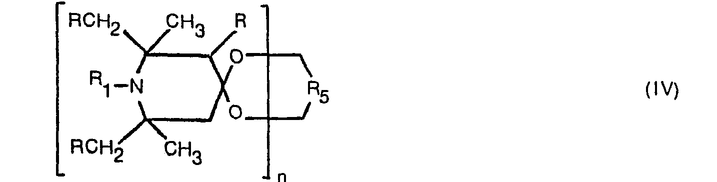 in which n is the number 1 or 2; R is hydrogen or methyl; R, is hydrogen, oxyl, C₁-C₁₈ alkyl, C₃-C₈ alkenyl, C₃-C₈ alkynyl, C₇-C₁₂ aralkyl, C₁-C₈ alkanoyl or C₃-C₅ alkenoyl; and R when n is 1 is C₂-C₈ alkylene or hydroxyalkylene or C₄-C₂₂ acyloxyalkylene; and R₅ when n is 2 is the group (-CH₂)₂C(CH₂-)₂.

6. Use according to Claim 1 of a light stabiliser of the formula (V) 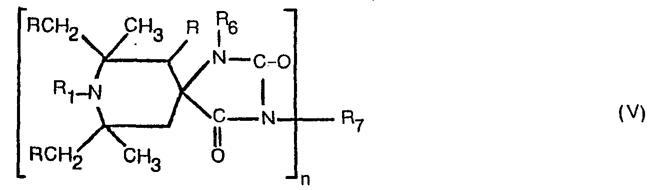 in which n is the number 1 or 2; R is hydrogen or methyl; R, is hydrogen, oxyl, C₁-C₁₈ alkyl, C₃-C₈ alkenyl, C₃-C₈ alkynyl, C₇-C₁₂ aralkyl, C₁-C₈ alkanoyl or C₃-C₅ alkenoyl; R₆ is hydrogen, C₁-C₁₂ alkyl, allyl, benzyl, glycidyl or C₂-C₆ alkoxyalkyl; and R₇ when n is 1 is hydrogen, C₁-C₁₂ alkyl, C₃-C₅ alkenyl, C₇-C₉ aralkyl, C₅-C₇ cycloalkyl, C₂-C₄ hydroxyalkyl, C₂-C₆ alkoxyalkyl, C₆-C₁₀ aryl, glycidyl, a group of the formula -(CH₂)ₘ-COO-Q or of the formula -(CH₂)ₘ-O-CO-Q wherein m is 1 or 2, and Q is C₁-C₄ alkyl or phenyl; or R₇ when n is 2 is C₂-C₁₂ alkylene or C₈-C₁₂ arylene, a group 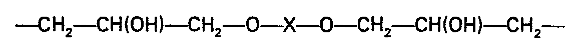 wherein X is C₂-C₁₀ alkylene, C₆-C₁₅ arylene or C₆-C₁₂ cycloalkylene, or a group 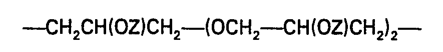 wherein Z is hydrogen, C₁-C₁₈ alkyl, allyl, benzyl, C₂-C₁₂ alkanoyl or benzoyl.

7. Use according to Claim 1 of a light stabiliser of the formula (VI) 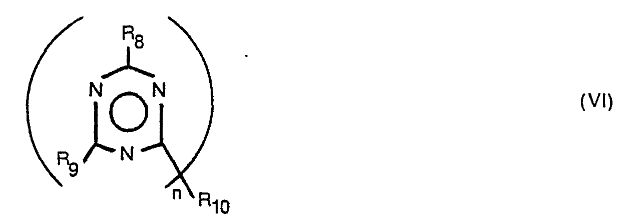 in which n is the number 1 or 2; and R₈ is a group of the formula 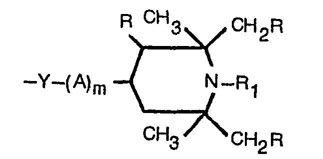 in which R is as defined under the formula (I), R, is as defined under a), Y is -O- or -NR₁₁-, A is C₂-C₆ alkylene; and m is the number 0 or 1; R₉ is the groups R₈, NR₁₁R₁₂, -OR₁₃;, -NHCH₂OR₁₃ or -N(CH₂OR₁₃)₂; R₁₀ when n is 1 is the groups R₈ or R₉; and R₁₀ when n is 2 is the group -Y-Q-Y-wherein Q is C₂-C₆ alkylene optionally interrupted by -N(R₁₄)-; R₁₁ is C₁-C₁₂ alkyl, cyclohexyl, benzyl or C₁-C₄ hydroxyalkyl, or a group of the formula 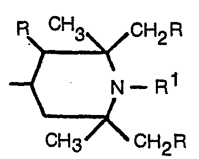 R₁₂ is C₁-C₁₂ alkyl, cyclohexyl, benzyl, C,-C₄ hydroxyalkyl; R₁₃ is hydrogen, C₁-C₁₂ alkyl or phenyl; and R,₄ is hydrogen or the group -CH₂0R,₃; or R,, and R₁₂ together are C₄-C_{S} alkylene or oxaalkylene, or R₁₁ and R₁₂ are each a group of the formula

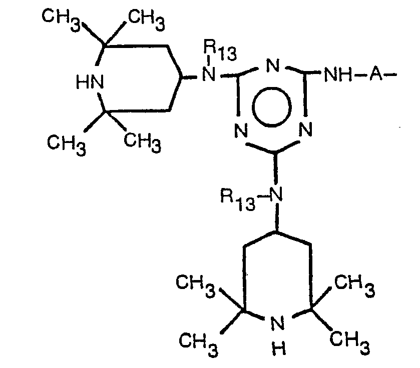

8. Use according to Claim 1 of a light stabiliser of the formula (VII) 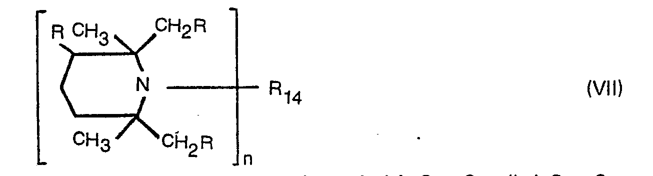 in which n is the number 1 or 2; R is hydrogen or methyl; and R₁₄ when n is 1 is C₄-C₁₈ alkyl, C₇-C₁₂ aralkyl, the group -CO-R₁₅, or C₁-C₄ alkyl which is substituted by -CN, -COOR₁₆, -OH, -OCOR₁₇ or 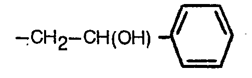 wherein R,₅ is C₁-C₁₂ alkyl, C₂-C₄ alkenyl or phenyl, R₁₆ is C₁-C₁₈ alkyl, R₁₇ is C₁-C₁₈ alkyl, C₂-C₁₀ alkenyl, cyclohexyl, benzyl or C₆-C₁₀ aryl; or R,₄ when n is 2 is C₄-C₁₂ alkylene, 2-butenylene-1,4, xylylene, the group 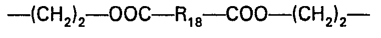 or the group -CH₂-OOC-R₁₉-COO-CH₂- wherein R₁₈ is C₂-C₁₀ alkylene, phenylene or cyclohexylene, and R₁₉ is C₂-C₁₀ alkylene, xylylene or cyclohexylene.

9. Use according to Claim 1 of a light stabiliser of the formula (VIII) 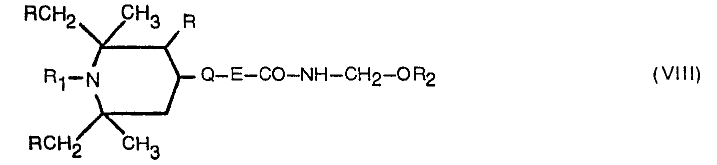 in which Q is -N(R₃)- or -0-; E is C₁-C₃ alkylene, the group -CH₂-CH(R₄)-O- wherein R₄ is hydrogen, methyl or phenyl, the group -(CH₂)₃-NH- or a single bond; R is hydrogen or methyl; R, is hydrogen, C₁-C₁₈ alkyl, C₃-C₈ alkenyl, C₃-C₈ alkynyl, C₇-C₁₂ aralkyl, C₁-C₈ alkanoyl, C₃-C₅ alkenoyl or glycidyl; R₂ is hydrogen or C₁-C₁₈ alkyl; R₃ is hydrogen, C₁-C₁₈ alkyl, C₅-C₇ cycloalkyl, C₇-C₁₂ aralkyl, cyanoethyl, C₆-C₁₀ aryl, the group -CH₂-CH(R₄)-OH wherein R₄ has the meaning defined above, a group of the formula _{'} 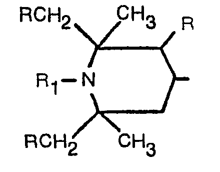 or a group of the formula 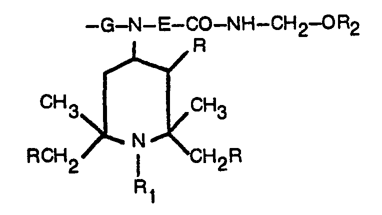 wherein G can be C₂-C₆ alkylene or C₆-C₁₂ arylene; or R₃ is a group -E-CO-NH-CH₂-OR₂-

10. Use according to Claim 1, wherein the light stabilisers used are polymeric compounds of which the recurring structural unit contains a 2,2,6,6-tetraalkylpiperidine radical, particularly polyesters, polyethers, polyamides, polyamines, polyurethanes, polyureas, polyaminotriazines, poly(meth)acrylates, poly(meth)acrylic amides, and copolymers thereof which contain radicals of this type.

11. Use according to any one of the preceding claims, wherein an acid addition salt of a 2,2,6,6-tetraalkylpiperidine compound is used.

12. Use according to any one of Claims 1-10, wherein a complex of a 2,2,6,6-tetraalkylpiperidine compound with a metal compound is used.

13. Use according to any one of the preceding claims, wherein the 2,2,6,6-tetraalkylpiperidine compound is used in an amount of 0.01 to 5 per cent by weight, relative to the solvent-free binder (lacquer resin).

14. Use according to Claim 13, wherein there are additionally used other light stabilisers, the amount of which is so chosen that the sum of all the light stabilisers is 0.02 to 5 per cent by weight, relative to the solvent-free binder (lacquer resin).

15. Use according to any one of Claims 13 or 14, wherein antioxidants, plasticisers, levelling agents, curing accelerators, thickeners, dispersing agents or agents improving adhesion are added as further additives.

16. Use according to Claim 1, for stabilising metallic lacquers based on hot-crosslinkable polyacrylate resins containing styrene incorporated by polymerisation.

17. Use according to any one of the preceding claims, for stabilising single-layer metallic lacquerings.

18. Use according to any one of Claims 1-16 for stabilising two-layer metallic lacquerings.

19. Use according to any one of the preceding claims, for stabilising motor car lacquers.
